# EUROPEAN PATENT APPLICATION

(11) **EP 2 299 365 A1**
(43) Date of publication of application: **23.03.2011**
(21) Application number: 08752593.7
(22) Date of filing: 12.05.2008
(51) Int. Cl.: G06F 13/00

(54) **METHOD OF CREATING WEB PAGE, WEB PAGE CREATING SYSTEM, LINKAGE SERVICE EQUIPMENT, AND COMPUTER PROGRAM**

(71) Applicant: Creative Link Corporation, Minato-ku Tokyo 105-0001 (JP)
(72) Inventor: TSUKADA, Hideto, Tokyo 105-0001 (JP); SANEKATA, Katsuyuki, Tokyo 105-0001 (JP); KOKADO, Masao, Tokyo 105-0001 (JP)
(74) Representative: Müller - Hoffmann & Partner
(86) International application number: PCT/JP2008/058713
(87) International publication number: WO 2009/139035

(57) **Abstract**

Smooth cooperation between a service for distributing websites wherein contents that are reprintable to blogs are arranged and a plurality of blog creating services is established. In order to help a user computer (2) with blog creation processing between a content server (11) which distributes websites wherein news articles and images are arranged as contents and blog servers (31, 41, and 51) of various companies relating to providing a blog creating service according to the operation of a user, a linkage server (21) which performs various kinds of linkage processing necessary for creating the blog is newly provided between the user computer (2) and various servers (11, 31, 41, and 51). Due to the existence of the linkage server (21), when the user of the user computer (2) finds the news article, the image, and the like which can be subject matters for creating the blog in the websites distributed by the content server (11), the user can easily lead the blog creating work to the web creating service on which the user has registered.

## Description

### TECHNICAL FIELD

The present invention relates to a method of creating a web page, a web page creating system, a linkage server apparatus, and a computer program where in a case of creating a new web page (e.g., a blog, etc.) by reprinting various contents (e.g., news articles, images, etc.) which are contained in a website, processing concerning reprinting of the contents to the web page to be created is smoothed.

### BACKGROUND ART

In the past, a web page was created on which a user's review (comments, etc.) to the various contents (news articles, images, etc.) provided on an Internet website was posted. These days, a blog is often used as a web page to be created for such uses. A blog corresponds to one kind of web page, which is in a form of a diary in which a page having a user's comments or the like posted thereon is arranged in time series, and has a special function named "trackback" for indicating a relationship to a website referred or cited. A blog creation is generally performed at a blog creating site corresponding to a blog creating service provided by various companies via a network, and has been facilitated when compared with a conventional general web page.

In recent years, the blog creating service has been provided by various kinds of companies (provider companies, portal site companies, site distribution companies of contents reprintable on the blog, etc.). A user to create a blog registers as a user on the blog creating service provided by any of the companies in order to create the blog in accordance with a processing procedure based on a site specification of the blog creating service to be registered.

Note that the present applicant has acquired a patent in which, when creating a web page (including the blog) having the various contents reprinted thereto, contents and copyright information of the contents (information in regards to a copyright, an author, etc.) to be reprinted to the web page are suitably protected to be used for the blog (see Patent Document 1).

### REFERENCE DOCUMENT(S) OF RELATED ART

[Patent Document 1] JP 3,857,717

### DISCLOSURE OF THE INVENTION PROBLEM(S) TO BE SOLVED BY THE INVENTION

These days, among the websites (a content site such as a news site) having the contents which can be reprinted to the blog, there exists a website in which the user can move directly from the content site to the blog creating site the user has registered by arranging in the site page, plural icons or the like for linkage to the blog creating site of each company providing the blog creating service.

However, even if movement between the sites is enabled, when actually creating the blog having the contents reprinted thereto, various pieces of data (data concerning the contents to be reprinted, data concerning the user creating the blog, etc.) needs to be sent and received between a content server distributing the contents to be reprinted to the blog and a blog server providing the blog creating site. Moreover, if a process specification is different from each other between the content server and the blog server due to a system configuration, the content server may be required to perform various processing according to a specification of a blog creating site for every blog server as well as the user may be required to input various operations. This poses a problem in which if the link is provided for moving from the content site to the blog creating site is enabled, a processing load on the content server or an operation load on the user is increased.

The present invention was made in consideration of the above described problem, and has an object to provide a method of creating a web page, a web page creating system, a linkage server apparatus and a computer program where a linkage server is newly installed for user's convenience which is intervened between the content server and the blog server or the like to perform linkage processing thereof in an integrated fashion so as not to increase the processing load on the content server device.
Further, the present invention has an object to provide a method of creating a web page, a web page creating system, a linkage server apparatus and a computer program where if the linkage server is provided, the processing concerning reprinting of the contents and a trackback can be performed smoothly.

### MEANS FOR SOLVING THE PROBLEMS

According to an aspect of the present invention, a method of creating a web page includes displaying a website including a content, obtained in such a manner in which a communication terminal device accesses a first server device storing content data on the basis of the content, the content data being made to correspond to content identification information, and performing processing relating to the creation of a web page having the content reprinted thereto, by the communication terminal device based on an edit page. Linkage processing between devices relating to a creation of the web page is performed by a second server device, and a third server device provides the edit page. The communication terminal device, if accepting a creation instruction of the web page having the content included in the website reprinted thereto, sends creation instruction data including the content identification information of the content to the second server device. The second server device, if receiving the creation instruction data, sends content request data specifying the content identification information included in the creation instruction data to the first server device. The first server device, if receiving the content request data, reads out the content data corresponding to the content identification information specified with the received content request data to send it to the second server device. The second server device, if receiving the content data, stores the received content data and sends a content address indicating a storage location of the stored content data to the third server device. The third server device, if receiving the content address, sends the edit page embedded with the received content address to the communication terminal device. The communication terminal device, if receiving the edit page, displays the edit page, and when accepting a comment with the displayed edit page, sends the accepted comment and the content address embedded in the edit page to the third server device.

Moreover, in the method of creating a web page according to the aspect of the present invention, the third server device may include a plurality of third server devices, the communication terminal device may accept the creation instruction corresponding to each of the plurality of third server devices, and when accepting the creation instruction, send the creation instruction data including third server device identification information identifying the third server device corresponding to the creation instruction to the second server device, and the second server device may send the content address to the third server device identified by the third server device identification information included in the received creation instruction data.

According to another aspect of the present invention, a method of creating a web page includes displaying a website including a content obtained in such a manner in which a communication terminal device accesses a first server device storing content data of the content, the content data being made to correspond to content identification information, and performing processing relating to a creation of a web page having the content reprinted thereto by the communication terminal device based on an edit page. Linkage processing between devices relating to the creation of the web page is performed by a second server device. The communication terminal device, if accepting a creation instruction of the web page having the content included in the website reprinted thereto, sends creation instruction data including the content identification information of the content to the second server device. The second server device, if receiving the creation instruction data, sends content request data specifying the content identification information included in the creation instruction data to the first server device. The first server device, if receiving the content request data, reads out the content data corresponding to the content identification information specified with the received content request data to send it to the second server device. The second server device, if receiving the content data, stores the received content data and sends the edit page embedded with a content address indicating a storage location of the stored content data to the communication terminal device. The communication terminal device, if receiving the edit page, displays the edit page, and when accepting a comment with the displayed edit page, sends the accepted comment and the content address embedded in the edit page to the second server device.

Further, in the method of creating a web page according to the other aspect of the present invention, the plurality of third server devices may store data relating to the created web page. The communication terminal device may accept the creation instruction corresponding to each of the plurality of third server devices, and when accepting the creation instruction, send the creation instruction data including third server device identification information identifying the third server device corresponding to the creation instruction to the second server device. The second server device may send the comment and content address sent from the communication terminal device to the third server device identified by the third server device identification information included in the received creation instruction data.

In the method of creating a web page according the aspect of the present invention, the third server device may store the sent comment and the content address as data relating to the web page. The third server device, if receiving a viewing request for the web page from a viewing terminal device, may read out the comment and the content address to be stored and send them to the viewing terminal device. The viewing terminal device, if receiving the comment and the content address, may send an acquisition request for the content data to the second server device based on the received content address. The second server device, if receiving the acquisition request for the content data, may read out the content data relating to the acquisition request to send it to the viewing terminal device. The viewing terminal device, if receiving the content data, may display the content based on the received content data along with the comment received from the third server device.

Further, in the method of creating a web page according the aspect of the present invention, the first server device may store accompany data accompanying with the content being made to correspond to the content identification information, and upon receiving the content request data, may send the accompany data along with the content data to the second server device. The second server device, if receiving the content data and the accompany data, may store the accompany data along with the content data. The second server device, if receiving the acquisition request for the content data, may read out the content data and the accompany data relating to the acquisition request to send them to the viewing terminal device.

Further, in the method of creating a web page according the aspect of the present invention, the second server device may provide a management website over a network, and may send a management site address relating to the management website to the third server device. The third server device, upon receiving the management site address sent from the second server device in a case of the sent comment and the content address having been stored as the data relating to the web page, may send a page address of the web page as a trackback to the second server device based on the management site address.

Furthermore, in the method of creating a web page according the aspect of the present invention, the second server device may be configured to create a management site address, as the management site address relating to the management website, by adding a variable address part to a fixed address part. The second server device may be configured to store the created management site address. The second server device may be configured to compare a site address to be a destination of the trackback with the stored management site address if receiving the page address as the trackback, and add the received page address to the management website if the both site addresses match with each other as a result of the comparison.

Moreover, in the method of creating a web page according the aspect of the present invention, the first server device, if receiving the content request data, may send the site address of the website relating to the content to the second server device. The second server device may send the site address to the third server device. The third server device, upon receiving the site address sent from the second server device in a case of the sent comment and the content address having been stored as data relating to the web page, may send a page address of the web page as a trackback to the first server device based on the site address.

Further, in the method of creating a web page according the aspect of the present invention, the first server device may be configured to create a site address as the site address by adding a variable address part to a fixed address part, store the created site address. The first server device may be configured to compare the site address to be a destination of the trackback with the stored site address if receiving the page address as the trackback. The first server device may be configured to add the received page address to the web site relating to the content if the both site addresses match with each other as a result of the comparison.

Further, in the method of creating a web page according the aspects of the present invention, the second server device may be configured to store the received content data being made to correspond to the content identification information if receiving the content data from the first server device. The second server device may be configured to search the content data corresponding to the content identification information included in the creation instruction data from the stored content data if receiving the creation instruction data from the communication terminal device. The second server device may be configured to send the content request data specifying the content identification information to the first server device, if the appropriated content data is not found as a result of searching.

Further, in the method of creating a web page according the aspects of the present invention, the second server device may be configured to send, if the appropriated content data is found as a result of searching, the content address indicating the storage location of the appropriated content data found by searching without sending the content request data to the first server device.

Further, in the method of creating a web page according the aspects of the present invention, the second server device may be configured to store a reference time in advance. The second server device may be configured to store, if receiving the content data from the first server device, the received content data being made to correspond to the content identification information, along with a storing date and time. The second server device may be configured to calculate, as the result of searching, if the appropriated content data is found, a time from the storing date and time relating to the appropriate content data to the searching time. The second server device may be configured to compare the calculated time with the reference time. The second server device may be configured to send, as a result of the comparison, if the calculated time is shorter than the reference time, the content address indicating the storage location of the appropriated content data found by searching without sending the content request data to the first server device.

According to still another aspect of the present invention, a method of creating a web page includes displaying a website including a content obtained in such a manner in which a communication terminal device accesses a first server device storing content data of the content, the content data being made to correspond to content identification information, and performing processing relating to a creation of a web page having the content reprinted thereto by the communication terminal device based on an edit page. Linkage processing between devices relating to the creation of the web page is performed by a second server device, and a third server device provides the edit page. The communication terminal device, if accepting a creation instruction of the web page having the content included in the website reprinted thereto, sends creation instruction data including the content identification information of the content to the second server device. The second server device, if receiving the creation instruction data, sends content request data specifying the content identification information included in the creation instruction data to the first server device. The first server device, if receiving the content request data, sends a content address indicating a storage location of the content data on the basis of the content identification information specified with the received content request data to the second server device. The second server device, if receiving the content address, sends the content address to the third server device. The third server device, if receiving the content address, sends the edit page embedded with the received content address to the communication terminal device. The communication terminal device, if receiving the edit page, displays the edit page, and when accepting a comment with the displayed edit page, sends the accepted comment and the content address embedded in the edit page to the third server device.

According to another aspect of the present invention, a method of creating a web page includes displaying a website including a content obtained in such a manner in which a communication terminal device accesses a first server device storing content data of the content, the content data being made to correspond to content identification information, and performing processing relating to a creation of a web page having the content reprinted thereto by the communication terminal device based on an edit page. Linkage processing between devices relating to the creation of the web page is performed by a second server device. The communication terminal device, if accepting a creation instruction of the web page having the content included in the website reprinted thereto, sends creation instruction data including the content identification information of the content to the second server device. The second server device, if receiving the creation instruction data, sends content request data specifying the content identification information included in the creation instruction data to the first server device. The first server device, if receiving the content request data, sends the content address indicating the storage location of the content data corresponding to the content identification information specified with the received content request data to the second server device. The second server device, if receiving the content address, sends the edit page embedded with the received content address to the communication terminal device. The communication terminal device, if receiving the edit page, displays the edit page, and when accepting a comment with the displayed edit page, sends the accepted comment and the content address embedded in the edit page to the third server device.

In the method of creating a web page according the aspects of the present invention, the communication terminal device, when accessing the first server device to display the website relating to the content, may send part request data relating to a request for a display element part which accepts the creation instruction to the second server device. The second server device, if receiving the part request data, sends the display element part accepting the creation instruction to the communication terminal device. The communication terminal device, if receiving the display element part, lays out the received display element part in the website relating to the content to display the website.

In the method of creating a web page according the aspects of the present invention, the communication terminal device may display the website via a browser based on a browser program. The second server device may send display definition data on the basis of an instruction accepting part which is able to accept the creation instruction and to be incorporated into and displayed in the browser to the communication terminal device. The communication terminal device, if receiving the display definition data, incorporates the instruction accepting part corresponding to the received display definition data into the browser to display the website via the browser.

According to an aspect of the present invention, a system of creating a web page includes a first server device for storing content data of a content being made to correspond to content identification information, a communication terminal device for accessing the first server device to display a website including the content and performing processing relating to a creation of a web page having the content reprinted thereto based on an edit page, a second server for performing linkage processing between devices relating to the creation of the web page, and a third server device for providing the edit page. The communication terminal device includes a means for performing processing of sending, if receiving instructions on creating the web page with the content reprinted thereto included in the web site, creation instruction data including the content identification information on the basis of the content to the second server device. The second server device includes a means for performing processing of sending, if receiving the creation instruction data, content request data specifying the content identification information included in the creation instruction data to the first server device. The first server devices includes a means for performing processing of reading out the content data corresponding to the content identification information specified with the received content request data and sending it to the second server device upon receiving the content request data. The second server device further includes a means for performing processing of storing the received content data upon receiving the content data, a means for performing the processing of sending a content address indicating a storage location of the content data to the third server device. The third server device includes a means for performing processing of embedding the received content address in the edit page upon receiving the content address, and a means for performing processing of sending the edit page embedded with the content address to the communication terminal device. The communication terminal device further includes a means for performing processing of displaying the received edit page upon receiving the edit page, and a means for performing processing of sending, upon receiving a comment on the displayed edit page, the received comment and the content address embedded in the edit page to the third server device.

According to another aspect of the present invention, a system of creating a web page includes a first server device for storing the content data of the content being made to correspond to content identification information, a communication terminal device for accessing the first server device to display a website including the content and performing processing relating to a creation of a web page having the content reprinted thereto based on an edit page, and a linkage server apparatus for performing linkage processing between devices relating to the creation of the web page. The communication terminal device includes a means for performing processing of sending, if receiving instructions on creating a web page reprinting the content included in the web site, the creation instruction data including content identification information of the content to the linkage server apparatus. The linkage server apparatus includes a means for performing processing of sending, if receiving the creation instruction data, the content request data specifying the content identification information included in the creation instruction data to content server device. The content server device includes a means for performing processing of reading out the content data corresponding to the content identification information specified with the received content request data and sending it to the linkage server apparatus upon receiving the content request data. The linkage server apparatus further includes a means for performing processing of storing the content data upon receiving the content data of the content from the content server device, a means for performing processing of embedding a content address indicating a storage location of the content data in the edit page, and a means for performing processing of sending the edit page embedded with the content address to the communication terminal device. The communication terminal device further includes a means for performing processing of displaying the received edit page upon receiving the edit page, and a means for performing processing of sending, upon receiving a comment on the displayed edit page, the received comment and the content address to the linkage server apparatus.

According to an aspect of the present invention, a linkage server apparatus for performing linkage processing between devices relating to the creation of a web page, in a case where an external communication terminal device performs processing relating to creation of the web page having a reprinted content, the content is relating to content data stored in an external content server device, the content data being made to correspond to content identification information, and the linkage server apparatus includes a means for performing processing of sending content request data specifying the content identification information included in creation instruction data to the external content server device if the creation instruction data including the content identification information is received from the external communication terminal device, a means for performing processing of storing the received content data if the content data is received in response to the content request data being sent, and a means for performing processing of sending a content address indicating a storage location of the content data to an external server device.

Moreover, according to another aspect of the present invention, a linkage server apparatus for performing linkage processing between devices relating to a creation of a web page, in a case where an external communication terminal device performs processing for creating the web page having a reprinted content, the content relating to content data stored in an external content server device, and the content data being made to correspond to content identification information, the linkage server apparatus includes a means for performing processing of sending content request data specifying the content identification information included in creation instruction data to the external content server device if the creation instruction data including the content identification information is received from the external communication terminal device, a means for performing processing of sending a received content address to the external server device if the content address indicating the storage location of the content data in the external content server device is received in response to the content request data being sent.

Further, according to another aspect of the present invention, a linkage server apparatus for performing linkage processing between devices relating to a creation of a web page, in a case where an external communication terminal device performs processing for creating the web page having a reprinted content thereon on the basis of an edit page, the content relating to content data stored in an external content server device, the content data being made to correspond to content identification information, and the linkage server apparatus includes a means for performing processing of sending content request data specifying the content identification information included in creation instruction data to the external content server device if the creation instruction data including the content identification information is received, from the external communication terminal device, a means for performing processing of storing, if the content data is received in response to the content request data being sent, the received content data, a means for performing processing of embedding a content address indicating a storage location of the content data in the edit page, and a means for performing processing of sending the edit page embedded with the content address to the external communication terminal device.

Furthermore, according to still another aspect of the present invention, a linkage server apparatus for performing linkage processing between devices relating to a creation of a web page, in a case where an external communication terminal device performs processing relating to the creation of the web page having a reprinted content on the basis of an edit page, the content relating to content data stored in an external content server device, the content data being made to correspond to content identification information, and the linkage server apparatus includes a means for performing processing of sending content request data specifying the content identification information included in creation instruction data to the external content server device if the creation instruction data including the content identification information is received from the external communication terminal device, a means for performing processing of embedding, in case where a content address indicating a storage location of the content data in the external content server device is received in response to the content request data being sent, the received content address in the edit page and a means for performing processing of sending the edit page having the embedded content address to the external communication terminal device.

According to an aspect of the present invention, a computer program for causing a computer having a communication means and a storage means to perform linkage processing between devices relating to a creation of a web page, in a case where an external communication terminal device performs processing relating to the creation of the web page having a reprinted content , the content relating to content data stored in an external content server device, the content data being made to correspond to content identification information, and the computer program causing the computer to function as a means for performing processing of sending content request data specifying the content identification information included in creation instruction data to the external content server device via the communication means if the creation instruction data including the content identification information is received, from the external communication terminal device, a means for performing processing of storing, if the content data is received in response to the content request data being sent, the received content data in the storage means, and a means performing processing of sending a content address indicating a storage location of the content data to the external server device via the communication means.

According to another aspect of the present invention, a computer program for causing a computer having a communication means and a storage means to perform linkage processing between devices relating to a creation of a web page, in a case where an external communication terminal device performs processing related to creation of the web page having a reprinted content, the content is related to content data stored in an external content server device, the content data being made to correspond to content identification information, and the computer program causing the computer to function as a means for performing processing of sending content request data specifying the content identification information included in creation instruction data to the external content server device via the communication means if the creation instruction data including the content identification information is received, from the external communication terminal device, and a means for performing processing of sending, in a case where a content address indicating a storage location of the content data in the external content server device is received in response to the content request data being sent, the received content address to the external server device via the communication means.

Further, according to another aspect of the present invention, a computer program for causing a computer having a communication means and a storage means to perform linkage processing between devices relating to a creation of a web page, in a case where an external communication terminal device performs processing for creating the web page having a reprinted content, the content is related to content data stored in an external content server device, the content data being made to correspond to content identification information based on an edit page, and the computer program causing the computer to function as a means for performing processing of sending content request data specifying the content identification information included in creation instruction data to the external content server device via the communication means if the creation instruction data including the content identification information is received, from the external communication terminal device, a means for performing processing of storing, if the content data is received in response to the content request data being sent, the received content data in the storage means, a means for performing processing of embedding a content address indicating a storage location of the content data in the edit page, and a means for performing processing of sending the edit page embedded with the content address to the external communication terminal device via the communication means.

Further, according to still another aspect of the present invention, a computer program for causing a computer having a communication means and a storage means to perform linkage processing between devices relating to a creation of a web page, in a case where an external communication terminal device performs processing for creating the web page having a reprinted content, the content is related to content data stored in an external content server device, the content data being made to correspond to content identification information, and the computer program causing the computer to function as a means for performing processing of sending content request data specifying the content identification information included in creation instruction data to the external content server device via the communication means if the creation instruction data including the content identification information is received, from the external communication terminal device, a means for performing processing of embedding, in a case where a content address indicating a storage location of the content data in the external content server device is received, in response to the content request data being sent, a received content address in the edit page, and a means for performing processing of sending the edit page embedded with the content address to the external communication terminal device via the communication means.

In the aspects of the present invention, the second server device (corresponding to the linkage server apparatus) for performing the linkage processing between the devices relating to the creation of the web page, when receives the content data from the first server device (corresponding to the content server device) for saving the content, stores the content data; therefore, the content to be reprinted to the web page as the creation target (e.g., a blog) can be provided by the second server device, and a processing load applied to the first server device in providing the content can be suppressed. Moreover, the second server device sends the content address indicating the storage location of the content data stored in the second server device and content identification data to the third server device (e.g., a blog server device); thus, the third server device can initiate creation processing of the web page having the content cited (reprinted) thereto by having these pieces of data as a trigger, and execute the subsequent required processing relating to the creation of the web page. That is, the third server device, in response to the reception of the various pieces of data from the second server device, embeds the content address in the edit page, and send the edit page to the communication terminal device; therefore, the communication terminal device can proceed the processing relating to the creation of the web page according to the edit page, and a user can concentrate on creating a comment and create the web page (e.g., the blog).

As described above, in the aspects of the present invention, the second server device initiates the processing by having the reception of the content data from the first server device as a trigger, and sends data needed for creating the web page to the third server device; thus, the creation processing of the web page can be proceeded in a common processing procedure as well as the creation processing of the web page can be proceeded without generating a large processing load on the first server device. Note that, for the content in the aspects of the present invention, what can be posted on the website becomes the target, specifically, corresponding to an article content of an article such as news, and an image (movie or still image) related to the article and the like.

Moreover, in the aspects of the present invention, if the usable third server device (e.g., the blog server device) exists in plural numbers, the content request data including the third server device identification information is sent from the communication terminal device to the second server device; thus, a blog service desired by the user can be specified from a plurality of blog services to create the web page such as the blog, and a business model cooperating with the plurality of blog services can be achieved easily.

Further, in the aspects of the present invention, the third server device, when storing the comment and the content address as data relating to the created web page and receiving a viewing request for the stored web page, sends the comment and the content address to a device (a viewing terminal device) of the sender of the viewing request; thus, the comment of the web page relating to the viewing request can be provided to the viewing terminal device. Still further, the viewing terminal device, when receiving the content address, sends an acquisition request for the content on the basis of the content address; therefore, a device of the saving source of the content can send the content data of the content corresponding to the acquisition request to the viewing terminal device, and the content of the web page relating to the viewing request can be displayed by the viewing terminal device via the various kinds of linkage processing.

Furthermore, in the aspects of the present invention, not only the content data, but also the accompany data accompanying with the content is sent to the second server device from the first server device, and the second server device also stores the accompany data which is made to correspond to the content data; thus, in response to the viewing request from the viewing terminal device, in addition to the content data, the accompany data can be smoothly provided, and when displaying the web page by the viewing terminal device, the accompany data accompanying with the content can also be displayed. Note that, for the accompany data accompanying with the content, tag information relating to the content, such as a META tag, copyright information of the content (including information indicating an owner of the copyright and the like), a title relating to the content, posting date and hour of the content on the website, and the like are appropriate.

In the aspects of the present invention, the second server device (corresponding to the linkage server apparatus) for performing the linkage processing between the devices related to the creation of the web page, when receiving the content address indicating the storage location of the content data from the first server device (corresponding to the content server device) for saving the content, sends the content address to the third server device (e.g., corresponding to the blog server device); thus the third server device embeds the received content address in the edit page, and sends the edit page to the communication terminal device. Therefore, the communication terminal device can proceed the processing relating to the creation of the web page according to the edit page, and also, because the content address is embedded in the edit page by the third server device in advance, the user can concentrate on creating the comment and create the web page.

As described above, in the aspects of the present invention, the second server device sends the content address indicating the storage location of the content data in the first server device to the third server device, so as to be able to perform a central role in the processing relating to the creation of the web page by the communication terminal device; thus, the creation processing of the web page is proceeded in a common processing procedure. Moreover, in the aspect of the present invention, because the content is maintained in the first server device, therefore, it is preferable to a case where saving and preserving the content of the reprinting source is desired to be reliably performed by the first server.

In the aspects of the present invention, even when a state where the content is saved by the first server device is maintained, the third server device, if receiving the viewing request for the stored web page, sends the comment and the content address to the device (the viewing terminal device) of the view requesting source; thus, the viewing terminal device can acquire the content data from the first server device.

Moreover, in the aspects of the present invention, the edit page relating to the creation of the web page is sent from the second server device (corresponding to the linkage server apparatus) to the communication terminal device; therefore, the processing relating to sending the edit page can be further efficiently performed, the processing content performed by the second server device for sending the edit page embedded with the content address can be further centralized, and displaying the edit page by the communication terminal device can be smoothly proceeded. Note that, even when sending the edit page from the second server device to the communication terminal device, if the usable third server device exists (e.g., the blog server device) in plural numbers, the communication terminal device sends the comment and the content address to the third server device used for creating the web page by the user; thus, the business model cooperating with a plurality of blog services can be easily provided.

Further, in the aspects of the present invention, the content data for reprinting is searched whether the second server device has already stored it. If not stored, the content request data is sent to the first server device, however, if stored, the content request data is not sent and the processing is proceeded using the content data found by searching; thus, the linkage processing between the devices can be further efficiently performed. Furthermore, in the aspect of the present invention, even when the content data for reprinting exists in the stored content data, the content data is determined to have been stored for over a certain time period by the comparison with the reference time, and if the certain time period does not pass, the processing is proceeded using the content data found by searching; thus, the data not matching in terms of time is eliminated and the content data can be efficiently provided for reprinting.

Further, in the aspects of the present invention, even when the state where the content is saved by the first server device is maintained, the edit page embedded with the content address is sent from the second server device (corresponding to the linkage server apparatus) to the communication terminal device; thus, the processing relating to sending the edit page can be efficiently performed, and can smoothly display the edit page in the communication terminal device.

In the aspects of the present invention, the second server device sends the management site address for the management website provided by the second server device over the network along with the content address to the third server device, and the third server device, upon storing the data of the created web page, sends it to the second server device as the trackback on the basis of the management site address; thus, on the management website in the second server device, the page address for the web page created by the linkage processing can be automatically acquired. As a result, when the web page to be created is the blog, the page address can be managed in the second server device as the trackback to the blog, and the trackback to the created blog can be reflected in the management website relating to the second server device.
Further, in the aspect of the present invention, the address for such a trackback is generated by combining the fixed address part and the variable address part by the second server device, and when the trackback is received, it is compared and determined whether the address relating to the trackback matches the generated address; thus, the useless trackback (e.g., a trackback having a purpose for an advertisement and the like) can be automatically eliminated.

Moreover, in the aspects of the present invention, the site address for the website distributed by the first server device is sent to the third server device via the second server device, and the third server device, upon storing the created web page, performs the trackback to the first server device on the basis of the site address; thus, on the website in the first server device, a link to the web page to which the content is reprinted can be automatically provided, and can contribute in improving viewing chances of the web site including the content. Further, in the aspect of the present invention, the address for the trackback is generated by combining the fixed address part and the variable address part by the first server device, and when the trackback is received, it is compared and determined whether the address relating to the trackback matches the generated address; thus, the useless trackback having the purpose for the advertisement and the like can be efficiently eliminated.

Further, in the aspects of the present invention, the second server device sends to the communication terminal device the display element part able to accept the creation instruction for the web page (blog) from the user; therefore, on the website side including the content, does not have an item to be additionally displayed, cooperation with the blog creating service can be easily achieved.
Still further, in the aspect of the present invention, the second server device sends the display definition data on the basis of the instruction accepting part (being able to accept the creation instructions for the web page (blog) from the user) which can be incorporated into the browser of the communication terminal device to the communication terminal device; thus, utilizing the function of the browser, the instruction accepting part which is able to accept the creation instruction for the web page (blog) from the user can be displayed by the communication terminal device.

### EFFECT OF THE INVENTION

In the aspects of the present invention, the second server device is intervened among the first server device, the third server device and the communication terminal device to send and receive the required data for creating the web page; thus, the web page creation processing can be proceeded with the processing procedure in an integrated fashion without increasing the processing load on the first server device, and the user can easily create the web page having the content reprinted thereto via the collaborative processing of the various devices.

Further, in the aspects of the present invention, the third server device sends the comment and the content address to the viewing terminal device which performs the viewing request for the web page; thus, the viewing terminal device can obtain the content data to display the content with the comment based on the content address which was sent.
Still further, in the aspects of the present invention, the first server device sends the accompany data accompanying with the content to the second server device, and the second server device also stores the accompany data which is made to correspond to the content data; thus, smoothly providing not only of the content data but also of the accompany data in response to the viewing request from the viewing terminal device is achieved, and the user of the viewing terminal device can also check the circumference information relating to the content with the content, improving the convenience for the user.
Still further, in the aspects of the present invention, if the usable third server devices exist in plural numbers, the second server device proceeds the processing to the third server device on the basis of the third server device identification information from the communication terminal; thus, the third server device desired by the user can be reliably utilized among the plurality of third server devices and a business model cooperating with a plurality of blog services can be achieved easily.

In the aspects of the present invention, even when the first server device stores the content data, the second server device performs linkage processing to appropriately send the content address to the third server device; thus, the web page creation processing in the integrated fashion can be proceeded with the predetermined procedure, and the user can easily create the web page having the content reprinted thereto via the collaborative processing of the various devices. Further, in the aspects of the present invention, even when storing the contents with the first server device, the third server device sends the comment and content address to the viewing terminal device upon receiving a viewing request for the stored web page; thus the viewing terminal device can provide to the user of the viewing terminal device the desired web page which acquires the content data from the first server device based on the content address which was received, and has the content reprinted thereto.

In the aspects of the present invention, the edit page relating to the web page creation is sent from the second server device to the communication terminal device; thus, the processing relating to sending the edit page can be further efficiently performed and the edit page to be sent is embedded with the content address in advance, thus further smoothly displaying the edit page in the communication terminal device is achieved.
Still further, in the aspects of the present invention, even when sending the edit page to the communication terminal device from the second server device, if the usable third server devices exist in plural numbers, the communication terminal device sends the comment and the content address to the third server device which is used by the user to create the web page; thus, a business model cooperating with a plurality of blog services can be achieved easily.
Furthermore, In the aspects of the present invention, even when maintaining the storage of contents with the first server device, the edit page embedded with the content address is sent from the second server device (corresponding to the linkage server apparatus) to the communication terminal device; thus the processing relating to sending the edit page can be efficient, and further smoothly display the edit page in the communication terminal device is achieved.

Further, in the aspects of the present invention, if the second server device stores the content data, the content data for reprinting is searched to confirm whether or not the second server device has already stored it. If not stored, the content request data is sent to the first server device; however, if stored, the content request data is not sent and the processing is proceeded using the content data found by searching; thus, efficiently linking the devices in order to efficiently use the content data stored in the second server device.
Still further, in the aspects of the present invention, even if the content data for reprinting exists in the content data to be stored, the content data is determined to be stored for over a certain time period by the comparison with the reference time, and if the certain time period does not pass, the processing is proceeded using the content data found in searching; thus, the data not matching in terms of time is eliminated and the content data can be efficiently provided for reprinting.

In the aspects of the present invention, the trackback is automatically performed to the management site address of the management website provided by the second server device over the network in conjunction with the web page creation (storage of the data relating to the web page in the third server device); thus, improving the validity of the management website.
Further, in the aspects of the present invention, the address for the trackback is generated combining the fixed address part and the variable address part by the second server device, and when the trackback is received, it is compared and determined whether or not the address relating to the trackback matches the generated address; thus, efficiently eliminating the useless trackback.

In the aspects of the present invention, the trackback is automatically performed to the website including the contents distributed by the first server device in conjunction with the web page creation (storage of the data relating to the web page in the third server device); thus, improving the validity of the created web page and the web site including the contents.
Further, in the aspects of the present invention, the address for the trackback to the web site including the contents is generated combining the fixed address part and the variable address part by the first server device, and when the trackback is received, it is compared and determined whether or not the address relating to the trackback matches the generated address; thus, efficiently eliminating the useless trackback.

Further, in the aspects of the present invention, the display element part, through which the creation instruction of the web page (blog) can be accepted from the user, is sent by the second server device to the communication terminal device; thus, linking to the blog creating service without adding something special to the website itself including the contents is achieved.
Still further, in the aspects of the present invention, the second server device sends the display definition data to the communication terminal device on the basis of the instruction accepting part (being able to accept the instructions for creating the web page (blog) from the user) which can be incorporated into the browser of the communication terminal device; thus, utilizing the function of the browser, the instruction accepting part which is able to accept the creation instruction of the web page (blog) from the user can be displayed on the communication terminal device, thus further smoothly initiating the blog creating service.

### BRIEF DESCRIPTION OF THE DRAWINGS

Fig. 1 is a schematic view showing the entire configuration of a blog creating system according to a first embodiment of the present invention.
Fig. 2 is a block diagram showing an internal configuration of a content server.
Fig. 3 is a schematic view showing a content page screen image of a news article content in a website.
Fig. 4 is a block diagram showing an internal configuration of a linkage server.
Fig. 5(a) is a schematic view showing a terms of service page screen image, and Fig. 5(b) is a schematic view showing a management page screen image.
Fig. 6 is a table showing sample of a collection content database.
Fig. 7 is a block diagram showing an internal configuration of a blog server.
Fig. 8(a) is a schematic view showing a user confirmation page screen image, and Fig. 8(b) is a schematic view showing a user registration page screen image.
Fig. 9 is a schematic view showing an edit page screen image.
Fig. 10 is a table showing sample of a user database.
Fig. 11 is a block diagram showing an internal configuration of a user computer.
Fig. 12 is a flowchart showing a partial processing procedure of a method of creating a web page according to the first embodiment.
Fig. 13 is a flowchart showing the partial processing procedure of the method of creating the web page relating to the first embodiment.
Fig. 14 is a flowchart showing the partial processing procedure of the method of creating the web page relating to the first embodiment.
Fig. 15 is a flowchart showing the partial processing procedure of the method of creating the web page relating to the first embodiment.
Fig. 16 is a flowchart showing a partial processing procedure of a method of creating a web page relating to a display of the created web page.
Fig. 17 is a schematic view showing a created blog page screen image.
Fig. 18(a) is a schematic view showing a bookmarklet registration screen image, and Fig. 18(b) is a schematic view showing a content page screen image displayed in a browser screen image of a modified example.
Fig. 19(a) is a partial flowchart showing a processing procedure of a modified example, Fig. 19(b) is a partial flowchart showing a processing procedure of another modified example.
Fig. 20 is a flowchart showing a processing procedure of a modified example relating to sending an article ID.
Fig. 21 is a schematic view of a simplified edit page screen image applied to a second embodiment.
Fig. 22 is a flowchart showing a partial processing procedure of a method of creating a web page relating to the second embodiment.

### DESCRIPTION OF NUMERALS

1: Blog Creating System
2 to 4: User Computer
6: Content Page Screen Image
6b: News Image
6c: Copyright Information
6d: News Title
6e: News Article
10: Content Site System
11: Content Server
13: Site Processing Program
14: Site Database
17: Content Database
20: Blog Linkage System
21: Linkage Server
23: Linkage Processing Program
24: Page Database
25: Collected Content Database
30: Blog System of Company A
31: Blog Server
33: Blog Processing Program
34: Site Page Database
35: User Database
36: Blog Database
37: User Confirmation Page Screen Image
38: User Registration Page Screen Image
39: Edit Page Screen Image
60: Blog Page Screen Image
70: Simplified Edit Page Screen Image

### BEST MODE OF CARRYING OUT THE INVENTION

### Embodiment 1

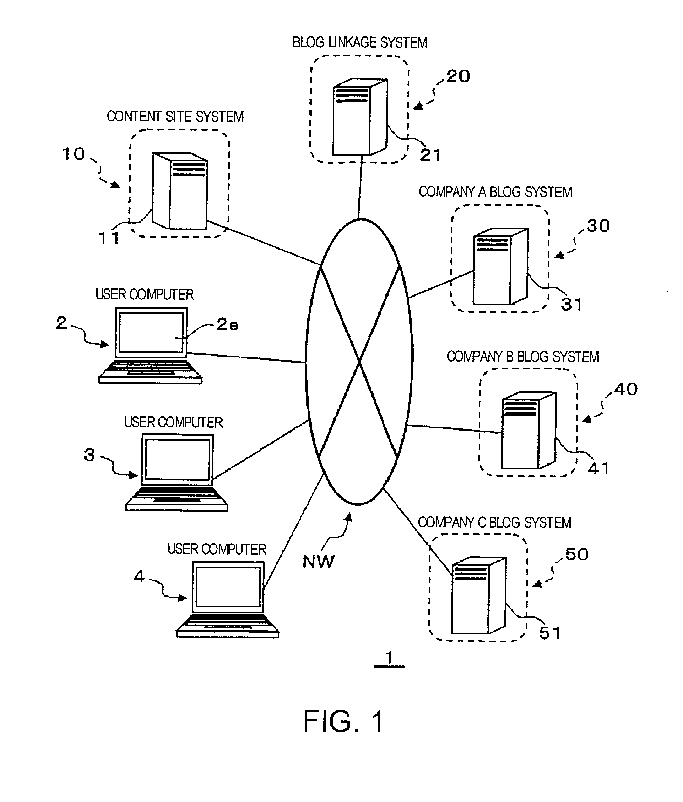

Fig. 1 shows a general configuration of a blog creating system 1 (corresponding to a web page creating system) according to a first embodiment of the present invention. In the blog creating system 1 of the first embodiment, a content site system 10, a blog linkage system 20, a blog system 30 of a company A, a blog system 40 of a company B, a blog system 50 of a company C, and a plurality of user computers 2 to 4 are coupled to one another via a network NW such as the Internet.

The content site system 10 included in the blog creating system 1 is managed by those who distribute and manage a website introducing various contents (a news distribution site in this embodiment) (site operating company), and includes a content server 11 which performs a distribution process of the website including the content (news content). It is assumed that the site operating company of the content site system 10 cooperates with a plurality of blog system operating companies (the total of three companies of the company A, company B and company C, in this embodiment) each of which provides a blog creating service so that each user can create a blog as a web page using (reprinting) the news content introduced in the website which the site operating company distributes.

The present invention is characterized in that when the user creates the blog (corresponding to the web page to which the content is reprinted), the blog linkage system 20 performs a suitable linkage processing among the content site system 10, any of the blog systems 30 to 50 on which the user registers for creation of the blog, and the user computers 2 to 4 the user uses, so that the content site system 10 is not made to perform significant additional processing and the blog is easily created with an efficient processing flow in an integrated fashion. Note that the total of three companies are shown as the blog systems providing the blog creating service in the first embodiment shown in Fig. 1; however, the number thereof is not limited to three and can be adequately increased and decreased. Similarly, in the first embodiment shown in Fig. 1, the total of three user computers 2 to 4 are shown as the computer each user uses; however, the number of user computers can also be adequately increased and decreased. Below, the first embodiment of the present invention will be described in detail.

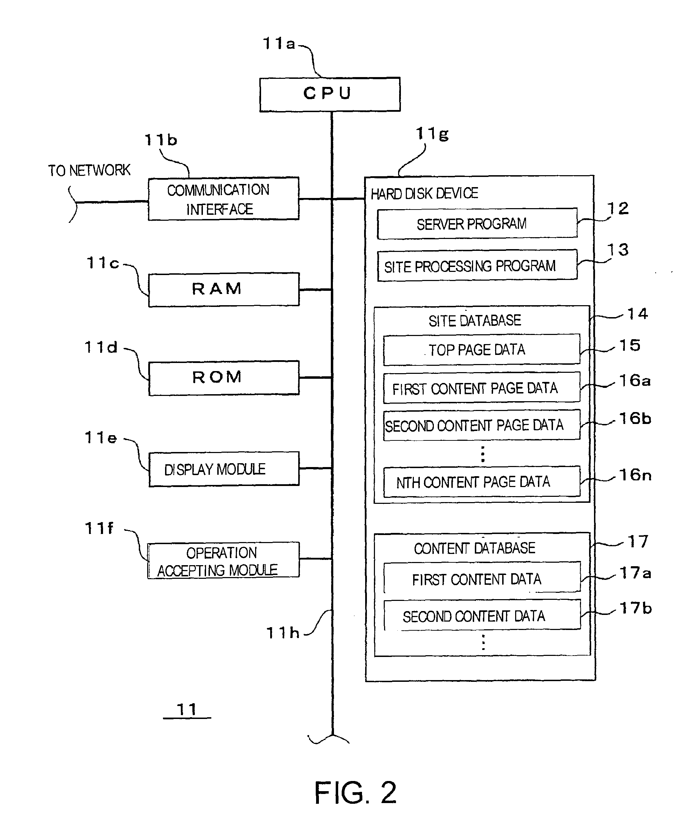

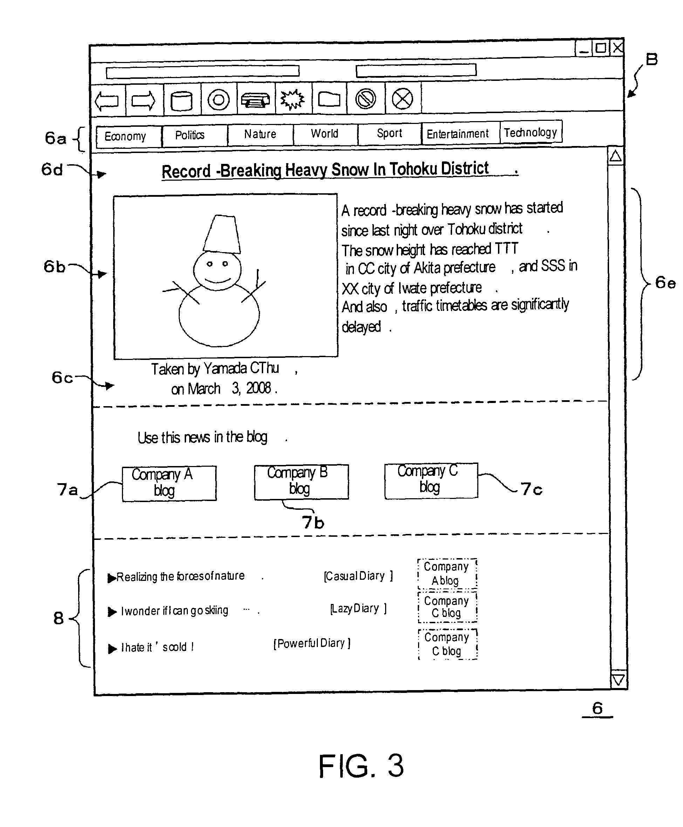

Fig. 2 shows an internal configuration of the content server 11 (corresponding to a first server device) which the content site system 10 has. The content server 11 of this embodiment performs a process which sends data of the website including news articles having images (the images and article contents each correspond to the content) to an access source, and displays each site page (see Fig. 3) configuring the website on a communication terminal device (e.g., user computers 2 to 4) of the access source. In the embodiment, a general server computer is applied to the content server 11, which is configured to have a CPU 11a, a communication interface 11b, a RAM 11c, a ROM 11d, a display module 11e, an operation accepting module 11f, and a hard disk device 11g coupled with each other via an internal bus 11h.

The CPU 11a performs various control processing according to defined contents of various programs stored in the hard disk device 11g or the like, for example, control the sending and receiving of a variety of data using the communication interface 11b or the like and performs a central control processing in a distribution processing of the website or the like. The communication interface 11b is connected to the network NW, and sends and receives various pieces of data by being controlled by the CPU 11a. The RAM 32 includes a SRAM, a flash memory or the like, and stores temporal data generated when the CPU 11a executes the various processing based on the program. The ROM 11d stores programs and the like in advance in which basic processing performed by the CPU 11a and the like are defined.

The display module 11e includes a display device, an interface for a display processing and the like to provide visual information to a server administrator managing the content server 11. The operation accepting module 11f is an interface for accepting an instruction from the server administrator of the content server 11, which corresponds to, for example, a keyboard, a mouse, and the like and transmits the instruction accepted from the server administrator via the internal bus 11h to the CPU 11a.

The hard disk device 11g stores a server program 12, a site processing program 13, a site database 14, a content database 17, and the like. The server program 12 is a program which defines contents relating to an operating system of the server computer. Moreover, the site processing program 13 is a program basically for defining a processing content which relates to the website distribution and the blog linkage (including processing for accepting a trackback and the like), and also for defining various processing associated with the embodiment.

The site processing program 13 is characterized by having the processing content associated with the embodiment in which when the requested data (corresponding to the content request data) relating to a request for the content (an acquisition request for the content specified with an article ID) is received from the blog linkage system 20 (linkage server 21), the data relating to the content on the basis of the request (content data, content accompany data, a trackback URL for a trackback to a content page of the website relating to the content, and the like) is read out from the hard disk device 11g to send to the blog linkage system 20.

Further, the site database 14 saved in the hard disk device 11g stores various pieces of page data (page data including an URL attached to every page) constituting the website distributed to the access source by the content server 11. The page data stored in the site database 14 includes top page data 15, first content page data 16a, second content page data 16b ..., nth content page data 16n and the like.

The top page data 15 is data for displaying the top page of the website distributed by the content server 11 and has a data, such as various matters including a description of a script-based language (e.g., description of JAVA (registered brand) script) or the like are described in a markup language (HTML, XML, etc.). Additionally, each of the content page data 16a and 16b is, similar to the top page data 15, has a data matter in which various matters including a description of a script-based language or the like are described in a markup language (HTML, XML, etc.). The matters described as the data matter includes a URL for accessing the content server 11, specifying the content data corresponding to the news articles to be introduced based on the article ID, defining a page layout of the specified content data, specifying the content accompany data accompanying with the content (e.g., a META tag, a title of the article, posting date and hour, an article summary (a part of the article), an article image smaller in size compared to Fig. 3, copyright information, etc.), laying out any of the specified content accompany data on the page, description of an address or the like for accessing the linkage server 21, sending a request for displaying a reprinting button to the linkage server 21, displaying the reprinting button (blog button) based on the reprinting button data sent in response to the request, and the like, as well as the definition for displaying the trackback if there is a trackback.

Further, the content database 17 saved in the hard disk device 11g stores a first content data 17a, a second content data 17b or the like, on the basis of each content to be introduced in the website in a state of being made to correspond to the article ID for identifying the article (corresponding to the content identification information). Of those stored in the content database 17, the first content data 17a, for example, is the data relating to the content (news image and news article) specified by the first content page data 16a described above. Moreover, the content database 17 (not shown) also saves the content accompany data corresponding to each of the content data 17a, 17b, and the like with the content accompany data which is made to correspond to the article ID. Note that, the content database 17 storing each of the contents data 17a and 17b being made to correspond to the article ID includes storing the content data 17a and 17b with adding the article ID (content accompany data is also similar).

When new news articles are generated, data corresponding to the generated news article is updated and enhanced as needed by the server administrator in each of the content page data 16a, 16b, and the like stored in the site database 14 described above, and each of the content data 17, 17b, and the like stored in the content database 17. Further, when receiving an access from the user's computer and providing a web page (contents page) the user wants to view, the content page data the user wants to view as well as the content data specified in the page, the content accompany data and the like are sent to the user computer of the access source from the content server 11.

Fig. 3 is a content page screen image 6 showing a state where the content page data, the content data, the content accompany data, and the like are sent from the content server 11 and the like to the user computer of the access source, and the data are displayed on the display module of the user computer (buttons 7a to 7c and the like of the content page screen image 6 are displayed based on the data sent from the linkage server 21). The content page screen image 6 is laid out in a browser screen image B on the basis of a browser program operated by the user computer, and the content page screen image 6 shown in Fig. 3 is displayed by a function of the browser program according to the description content of the markup language relating to the received content page data.

The content page screen image 6 includes a menu column 6a in a line (a column able to accept a selection operation) at the top thereof, a news title 6d (a record-breaking heavy snow in the Tohoku district) on the basis of the content accompany data below the menu column 6a, a news image 6b (corresponding to the content data including the article ID) on the basis of the image content data, and the copyright information 6c (the picture taken by Yamada CThu, on March 3, 2008) on the basis of the content accompany data in the order from above, and a news article 6e (corresponding to the content data including the article ID) on the basis of the article content data in the right hand of the news image 6b, which are laid out thereon.

Further, the content page screen image 6 includes the company A blog button 7a, the company B blog button 7b, and the company C blog button 7c corresponding to the reprinting button data sent from the linkage server 21, which are laid out below the news articles 6e, according to the script-based description included in the content page data. The blog buttons 7a to 7c (corresponding to a display element part) able to accept the user's selection operation respectively correspond to the blog servers 31 to 51 (corresponding to a plurality of third server devices) included in the blog systems 30 to 50 of respective companies, where each of the buttons includes a blog site ID (corresponding to third server device identification information) for identifying each of the blog servers 31 to 51 corresponding thereto, and a link with the linkage server 21. Therefore, each of the blog buttons 7a to 7c can accept a creation instruction corresponding to each of the blog servers 31 to 51. That is, acceptance of the user's selection by each of the blog buttons 7a to 7c means that the blog creation instruction is inputted, and blog server identification information included in the selected blog button and the blog creation instruction including the article ID of the content data included in the content page screen image 6 are sent to the linkage server 21 of a destination of the link. The content page screen image 6 provides a trackback field 8 listing the trackback which shows the link to the blog to which this news (content) is reprinted, below each of the blog buttons 7a to 7c. Note that the content page screen image 6 shown in Fig. 3 is only one example, and the news image, the news article and the like laid out are different depending on the matter of the content data.

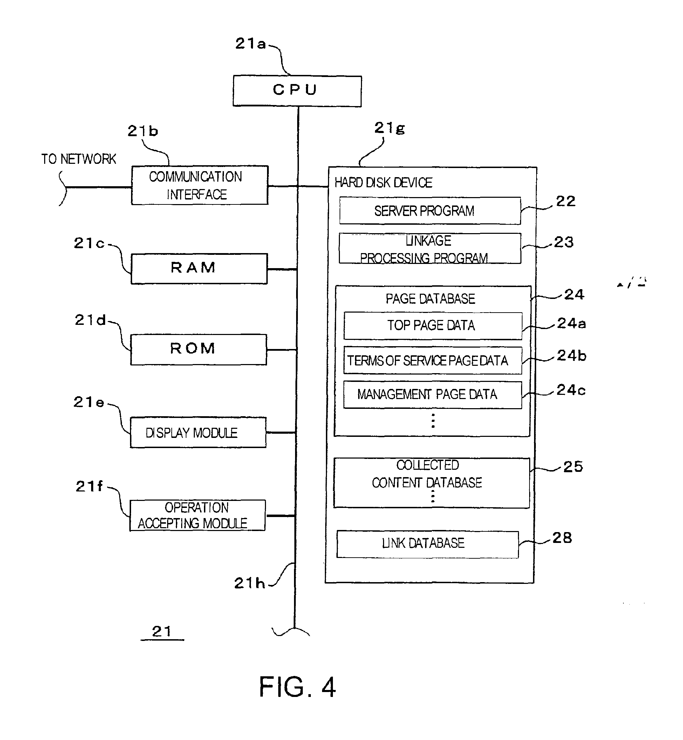

Meanwhile, Fig. 4 shows the internal configuration of the linkage server 21 (corresponding to a second server device (linkage server apparatus)) which the blog linkage system 20 has. The blog linkage system 20 (linkage server 21) is managed by those who provide a linkage processing service necessary for creating the blog among the systems 10 and 30 to 50, and the user computers 2 to 4 shown in Fig. 1 (linkage processing service providing company). The linkage server 21 is similar to the content server 11, a general server computer, and is configured to have a CPU 21a, a communication interface 21b (corresponding to a communication means), a RAM 21c, a ROM 21d, a display module 21e, an operation accepting module 21f, and a hard disk device 21g (corresponding to a storage means) coupled with an internal bus 21h, where each of the components 21a to 21h has the similar basic function to the content server 11.

Further, the hard disk device 21g stores a server program 22, a linkage processing program 23 (corresponding to a computer program), a page database 24, a collected content database 25, a link database 28 and the like. The server program 22 is a program which defines contents relating to an operating system of the server computer. The linkage processing program 23 (corresponding to the computer program) defines the linkage processing performed by the linkage server 21, and the CPU 21a performs various processing according to the defined contents. Note that, the detailed contents defined by the linkage processing program 23 will be described later.

The page database 24 stored in the hard disk device 21g stores the page data of the web page provided by the linkage server 21, and in the embodiment, stores top page data 24a, terms of service page data 24b, management page data 24c relating to the management website, and the like. The terms of service page data 24b is sent to the user computer when the user receives a linkage service provided by the linkage server 21, and has the data matter in which the matter for displaying the terms of service and the matter for displaying the selectable button and the like are described in the markup language (HTML, XML, etc.).

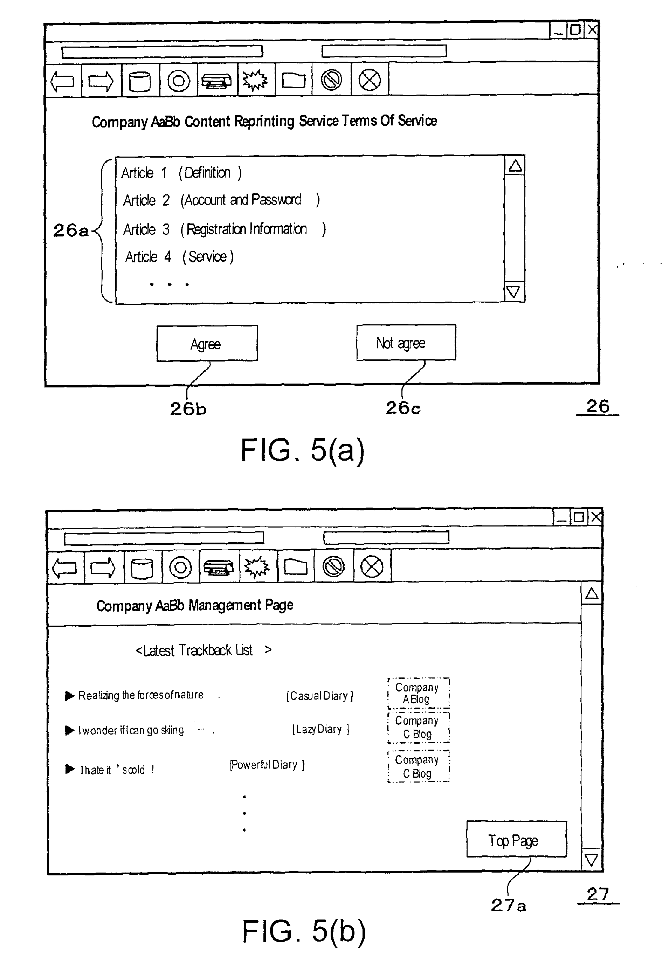

Fig. 5(a) shows a terms of service page screen image 26 corresponding to the terms of service page data 24b displayed on the display module of the user computer, and the terms of service page screen image 26 is a screen image in which the data description contents of the terms of service page data 24b displayed in a browser screen image according to the function of the browser program operated by the user computer. The terms of service page screen image 26 includes a terms of service field 26a having a plurality of provisions described therein, and an agreement button 26b (button on which "agree" is written) and a no agreement button 26c (button on which "not agree" is written) which are laid out in selectable positions. Note that, the terms of service page data 24b includes a description having a return data indicating the agreement returned to the linkage server 21 when the agreement button 26b accepts the user's selection operation, and a description having the return data indicating the no agreement returned to the linkage server 21 when the no agreement button 26c accepts the user's selection operation.

Fig. 5(b) shows a state in which a management page screen image 27 of the management website (corresponding to the website which is established on the network by the linkage server 21) corresponding to the management page data 24c is displayed on the display module of the user computer or the like. The management page screen image 27 has posted therein the trackback of the blog which is created through the linkage processing of the linkage server 21, and the blog created by the linkage processing can be confirmed only by viewing the management page screen image 27. Note that, the display content in the management page screen image 27 is updated every time when the trackback is added to the management page data 24c.

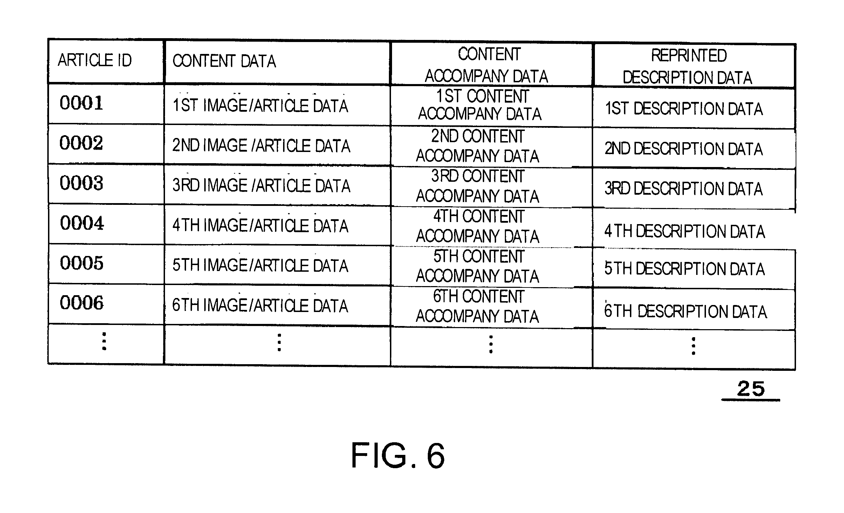

Fig. 6 shows a summary image of the contents of collected content database 25. The collected content database 25 stores the content data, the content accompany data, reprinted description data created in the linkage server 21, the trackback URL to the web page posting the content relating to the content data (URL used for the trackback to the content server 11), and the like which are sent from the content server 11 described above, in a state which is correspondent to the article ID, and the stored data is added every time it is sent from the content server 11. Note that, the collected content database 25 stores each data along with date and hour of storing (saving date and hour), and the trackback URL stored in the collected content database 25 is eliminated from being shown in Fig. 6.

Further, the link database 28 stores, in a state of being associated with the blog site ID of each of the blog servers 31 to 51 included in the blog systems 30 to 50 of the respective companies shown in Fig. 1, a blog server address indicating the destination of access to each of the blog servers 31 to 51, a reprinting button image URL (corresponding to the reprinting button data) of each of the blog buttons 7a to 7c (corresponding to the reprinting button) shown in Fig. 3, and the like.

Note that, the reprinting button data (e.g., the description data in the script-based language) for displaying the blog buttons 7a to 7c (corresponding to the display element part) has various descriptions other than those for displaying the blog buttons 7a to 7c. Specifically, the reprinting button data describes therein a link URL (address data) for accessing the linkage server 21 and the blog site ID indicating the server of the providing company of the blog creating service corresponding to each of the blog buttons 7a to 7c, as well as it describes therein the processing in which the article ID of the content and the like included in the content page screen image 6 (content page data) are extracted when each of the blog buttons 7a to 7c is selected, the creation instruction (creation instruction data) including each data is sent based on the link URL described above, and the like.

Next, the linkage processing program 23 will be described in detail. The linkage processing program 23 defines various processing matters. Specifically it defines, when the linkage server 21 receives the request data indicating the request for displaying the reprinting button, the reprinting button data included in the link database 28 is read out from the hard disk device 21g and sent to the device of a requesting source (for example, the user computer which accessed the content server 11) via the communication interface 21b. Additionally, upon receiving the blog creation instruction data for instructing the creation of the blog (data including the article ID of content to be a reprinted target and the like), the terms of service data 24a described above is defined to be sent to the sender of the data. Additionally, upon receiving the return data indicating the agreement, the linkage processing program 23 defines the request data for the content specifying with the article ID to be sent to the content server 11 via the communication interface 21b. Further, the linkage processing program 23 also defines the processing in which upon receiving the content data, the content accompany data, and the like from the content server 11, a description of processing for reprinting the data relating to the content to the blog is created in the script language (JAVA (registered trademark) script), the reprinted description data described with the entire linkage processing including the description is formed in an XML form, these pieces of data (the content data, the reprinted description data, content accompany data, etc.) are stored in the collected content database 25 described above which is made to correspond to the article ID.

Then, the linkage processing program 23 defines that the article ID relating to the content data (corresponding to the content identification data) received from the content server 11, the blog site ID, and the like are sent, along with the address data which shows the user computer of the access source, to the blog system corresponding to the blog site ID (service company identification data) included in the creation instruction data.

Further, when the user ID is sent from the blog system, the linkage processing program 23 also defines to read out not only the data of the content address indicating a record location in the collected content database 25 of the content data, the content accompany data, the reprinted description data, and the like, which are made to correspond to the article ID sent to the blog system (specifically, an URL indicating a storage location of the content data, an URL indicating a storage location of the content accompany data, an URL indicating a storage location of the reprinted description data), but also the article summary data, the small sized image data, the copyright information, and the like included in the content accompany data to be sent to the blog system of the destination to which the article ID has sent in the previous step, along with the trackback URL of the linkage server 21 (corresponding to a management site address of the management website) and the trackback URL of the content server 11 (link data of the content page relating to the site address of the website distributed by the content server 11, which is stored in the collected content database 25). Note that, upon receiving the acquisition request for the content data or the like from the user terminal or the like, when viewing the blog which was created, the linkage processing program 23 defines that the requested content data, the content accompany data made to correspond to the content data, and the like are read out from the collected content database 25 and sent to the requesting source.

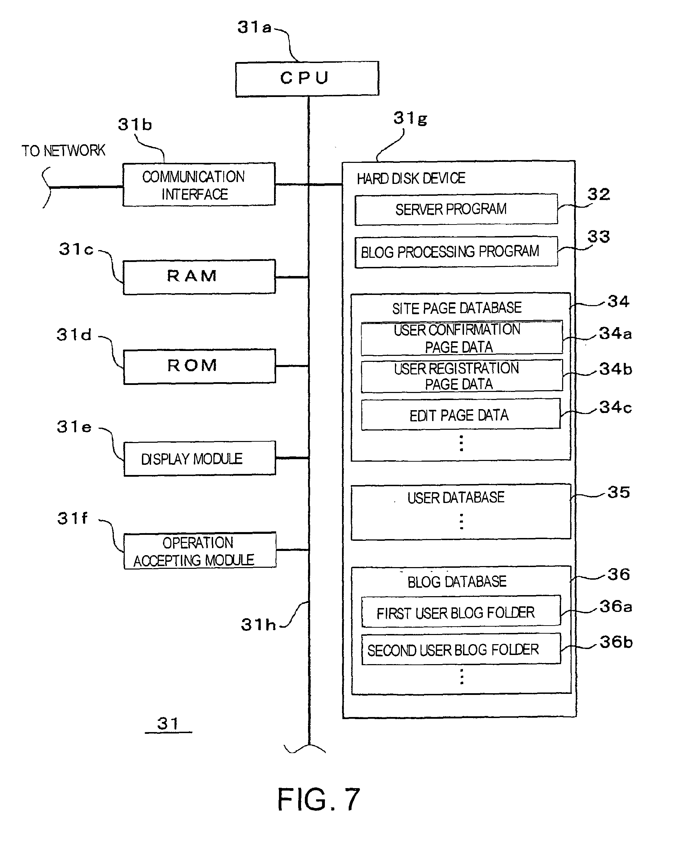

Meanwhile, Fig. 7 shows the internal configuration of the blog server 31 of the company A which the company A blog system 30 has. The blog system 30 of the company A (including the blog server 31) is managed by the company A which provides the blog creating service to the user. The blog servers 31 to 51 (corresponding to the third server device) included in the blog systems 30 to 50 of respective companies shown in Fig. 1 are basically similar to each other among the companies, and thus the description is given below using the blog server 31 of the company A as a representative example.

The blog server 31 is, similar to the content server 11 and the linkage server 21 described above, a general server computer, and is configured to have a CPU 31a, a communication interface 31b, a RAM 31c, a ROM 31d, a display module 31e, an operation accepting module 31f, and a hard disk device 31 g coupled with an internal bus 31h, where each of the parts 31a to 31h has the similar basic function to the content server 11 and linkage server 21.

Further, the hard disk device 31g stores a server program 32, a blog processing program 33, a site page database 34, a user database 35, a blog database 36, and the like. The server program 32 is a program which defines contents relating to an operating system of the server computer. The blog processing program 33 defines various processing the blog server 31 performs, and the CPU 31 a performs various controls according to the defined contents. The matters defined by the blog processing program 33 include a matter relating to the user registration, a matter for providing an edit page when creating the blog, a matter for storing data of the blog created through the edit page (data accepted in the edit page) for every user, a matter for sending the stored blog (data of the blog) in response to a request, and the like; details of which are described later.

The site page database 34 saved in the hard disk device 31g stores the page data of the web page provided by the blog server 31, and includes, in the embodiment, user confirmation page data 34a, user registration page data 34b, edit page data 34c, and the like. The user confirmation page data 34a is a page for confirming whether the user using the blog creating service of the company A is the registered user, which has an entry field for the user ID and the like, as well as a link to a user registration page provided for an unregistered user, and has a data matter for displaying the user confirmation page with the contents as above, described in the markup language (HTML, XML, etc.).

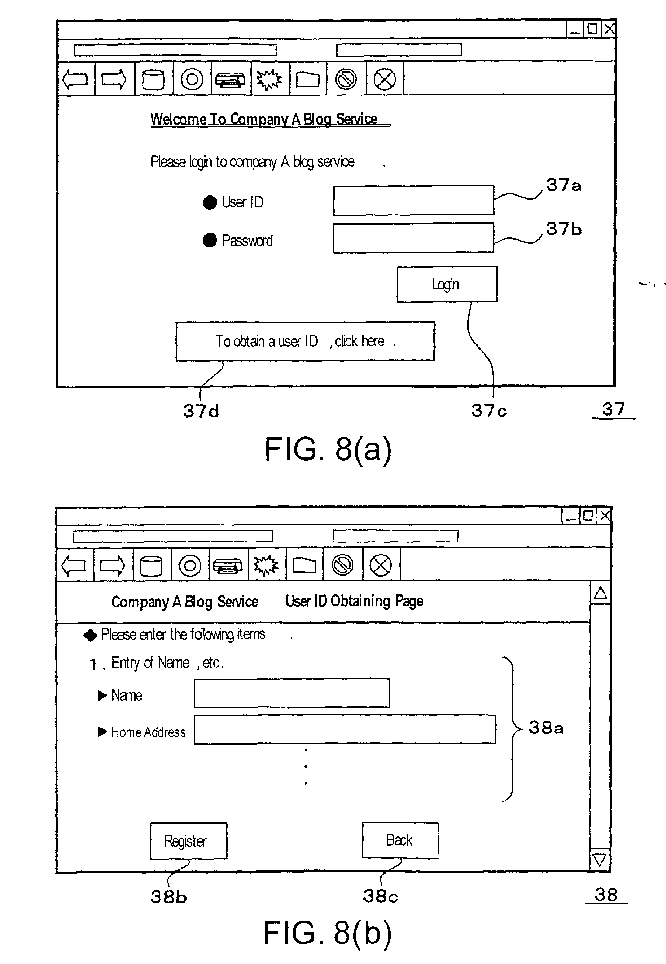

Fig. 8(a) shows a user confirmation screen image 37 corresponding to the user confirmation page data 34a displayed on the display module of the user computer. The user confirmation page screen 37 is displayed with the data description contents of the user confirmation page data 34a in the browser screen image according to the function of the browser program operated by the user computer. The user confirmation page screen image 37 has an ID entry field 37a for inputting the user ID of the user registered for the service of the company A, a password entry field 37b for inputting a password set by the user at the time of registration, a login button 37c, and a link button 37d for the unregistered user, which are laid out.

The login button 37c can accept the user's selection operation, and when accepting the selection operation with the entry fields 37a and 37b being entered with the user ID and the password respectively, the entered user ID and password are sent to the blog server 31. Moreover, the link button 37d can also accept the user's selection operation, and when accepting the selection operation, the request data indicating the request for the user registration page data 34b stored in the site page database 34 is sent to the blog server 31.

Fig. 8(b) shows a user registration page screen image 38 corresponding to the user registration page data 34b displayed on the display module of the user computer. The user registration page screen image 38 has a plurality of entry fields 38a necessary for the user registration, and a registration button 38b and a back button 38c which are selectable. When the registration button 38b accepts the selection operation in a state where the predetermined item has been inputted into the entry field 38a, each entered data is sent to the blog server 31. Further, when the back button 38c accepts the selection operation, the request data indicating the request for the user confirmation page data 34a is sent to the blog server 31 in order to redisplay the user confirmation page screen image 37 of Fig. 8(a).

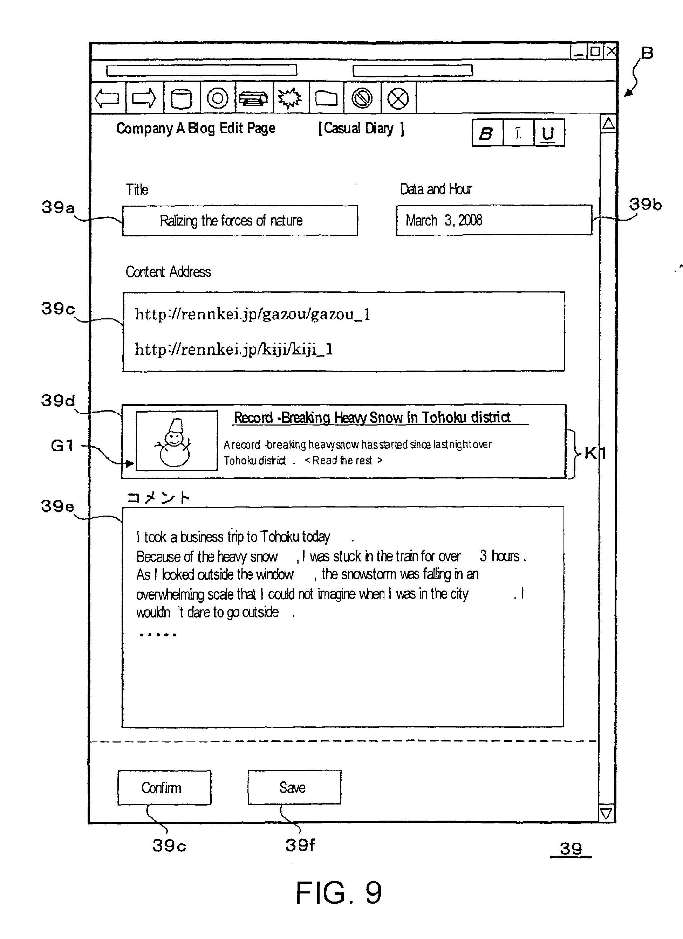

Fig. 9 shows a state where an edit page screen image 39 corresponding to the edit page data 34c is displayed on the display module of the user computer. The edit page data 34c is displayed through the browser screen image B corresponding to the browser program operated by the user computer, and includes a data matter which has a description of processing for automatically embedding the data relating to the content sent from the linkage server 21 into the edit page.

The edit page screen image 39 has a title entry field 39a for being entered by the user, a date and hour field 39b for being automatically embedded with a blog creation date and hour by a clock function of the user computer, a content address field 39c embedded with a URL (http://rennkei.jp/gazou/gazou_1, http://rennkei.jp/kiji/kiji_1) indicating the storage location of the content data (news image content data and news article content data) in the collected content database 25 of the linkage server 21, a content field 39d embedded with a part of the content accompany data (news title, image data G1 having a small size, article summary data K1, etc.), and a comment field 39e for accepting a user's comment entered by the user operation, which are laid out.

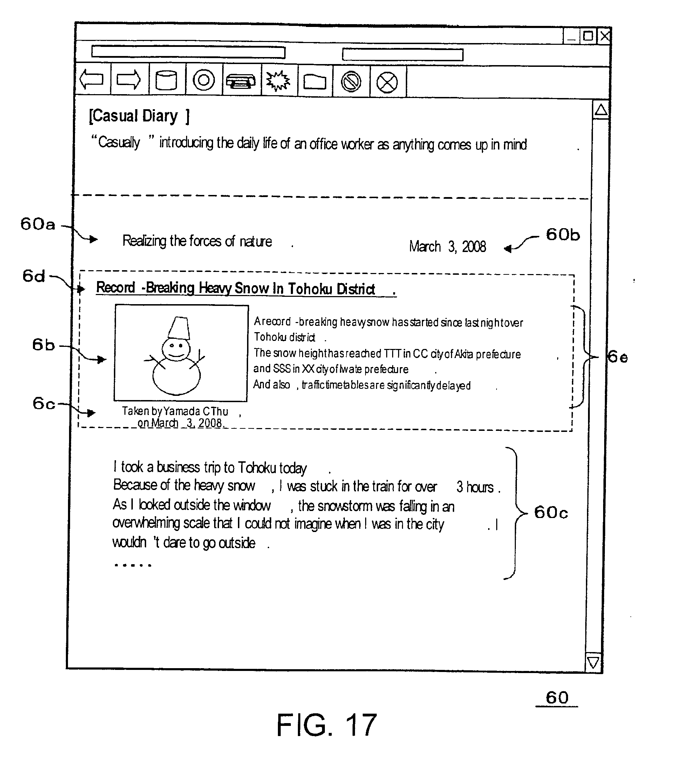

Further, the edit page screen image 39 has a confirmation button 39c and a save button 39f which are selectable below the comment field 39e. When the confirmation button 39c accepts the user's selection operation, the request data for the data to be displayed and the like is sent to the blog server 31 so that a blog page screen image (see Fig. 17) is displayed based on the data entered and data embedded in the edit page screen image 39. When the save button 39f accepts the user's selection operation, the data entered and data embedded in the edit page screen image 39 is sent to the blog server 31 and each data that was sent is stored in the blog database 36.

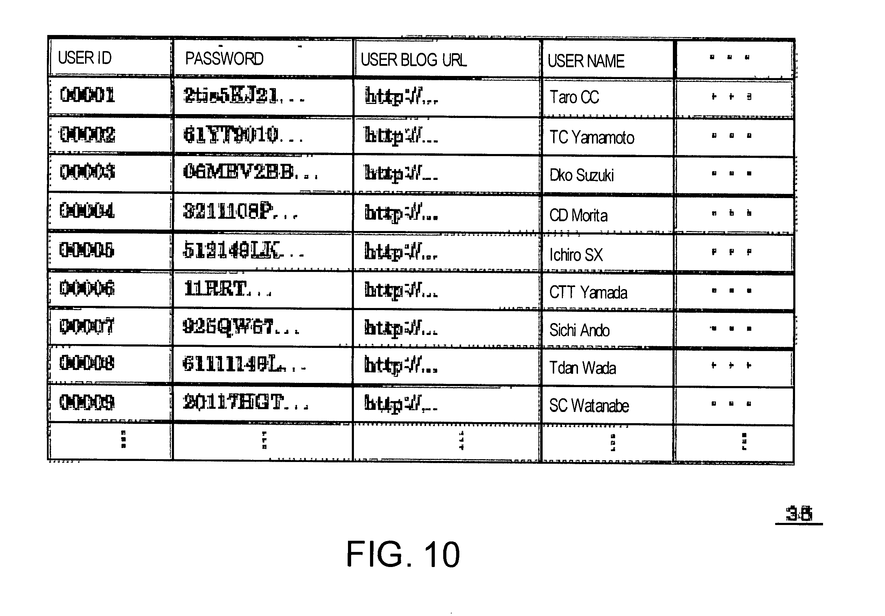

Fig. 10 shows the summary image of the contents of the user database 35 saved in the hard disk device 31g. The user database 35 stores the data and the like entered in the user registration page screen image 38 of Fig. 8(b), which is made to correspond to each user ID. The items stored for each user ID include the password, the user blog URL, the user name, and the like. Note that, numerals are used for the user ID for convenience in Fig. 10; however, other than the numerals, kanji characters, hiragana characters, katakana characters, alphabet, symbols and the like can be used, and further, the user ID may include a character string of the numerals, kanji characters, hiragana characters, katakana characters, alphabet, symbols, and the like by which the user can be identified.

Additionally, the blog database 36 stored in the hard disk device 31g saves and stores the data entered and data embedded in the edit page screen image 39 of Fig. 9, which is made to correspond to the date and hour (date and hour corresponding to creation of the data to be saved) for each user. Specifically, the blog database 36 has, a first user blog folder 36a (for example, a folder of the user having the user ID "00001"), a second user folder 36b (for example, a folder of the user having the user ID "00002"), and the like for each of the registered user's user ID. Each of the user blog folders 36a and 36b saves the data of the blog created by the user (the data entered and data embedded in the edit page screen image 39) in one file per one blog page, and also saves base background data set and registered by the user, and the like. Further, the storage locations of these user blog folders 36a and 36b, and the like in the blog database 36 correspond to the user blog URL.

The blog processing program 33 stored in the hard disk device 31g is described in detail. The blog processing program 33 defines that, upon receiving the article ID and the like from the linkage server 21 along with the address data of the user computer, the process is initiated with the reception as a trigger, and that the user confirmation page data 34a on the basis of the user confirmation page screen image 37 of Fig. 8(a) is sent to a destination of the address (user computer) indicated by the address data transmitted from the linkage server 21. Further, it is defined that, upon receiving the user ID and password entered in the user confirmation page screen image 37, the blog processing program 33 refers to the user database 35 of Fig. 10 and detects whether the relevant user is the registered user. If the user is determined to be the registered user, the blog processing program 33 sends the user ID and the user blog URL correspondent to the user ID to the linkage server 21. Further, the blog processing program 33 defines upon receiving, in response to the sent user ID, various pieces of data such as the data of the content address, the article summary data, the image data having the small size, the copyright information, a destination URL of the trackback (a URL of the management page screen image 27 of the linkage server 21, and a URL of the content page screen image 6 of the content server 11), and the like sent from the linkage server 21, the blog server 31 performs processing in which the received various pieces of data is embedded in each of the fields 39c and 39d of the edit page screen image 39 of Fig. 9, and the edit page data 34c embedded with the various pieces of data is sent to the destination of the address (user computer) indicated by the address data.

Further, the blog processing program 33 also defines when the data entered and data embedded in the edit page screen image 39 of Fig. 9 (each data corresponds to the data of the created blog) is received, each received data is saved in the user blog folders 36a and 36b corresponding to the user ID in the blog database 36. Then, the blog processing program 33 defines the blog which has been determined to be created when each of the data received is stored, and the blog page address and the like of the blog (web page) are sent as the trackback to the linkage server 21 and the content server 11 referring to the URL of the management page screen image 27 and the URL of the content page screen image 6. Moreover, the blog processing program 33 defines that when a viewing request for a blog corresponding to the blog data (data of the created blog) included in each user blog folder stored in the blog database 36, the blog data is sent to the view requesting source. Note that, the viewing request for the blog is generally requested by directly inputting the user blog URL, selecting from a search result of a search site, selecting a bookmark, selecting a link at a destination site of the trackback, or the like.

Finally, the user computers 2, 3, and 4 shown in Fig. 1 will be described. The user computers 2, 3 and 4 are used as the communication terminal devices when the user creates the blog and as viewing terminal devices when the user views the created blog. In the embodiment, a general-purpose personal computer is applied to the user computers 2, 3 and 4, which have the similar basic configurations. Thus, the configuration of each user computer is described using the user computer 2 as a representative example in the following description.

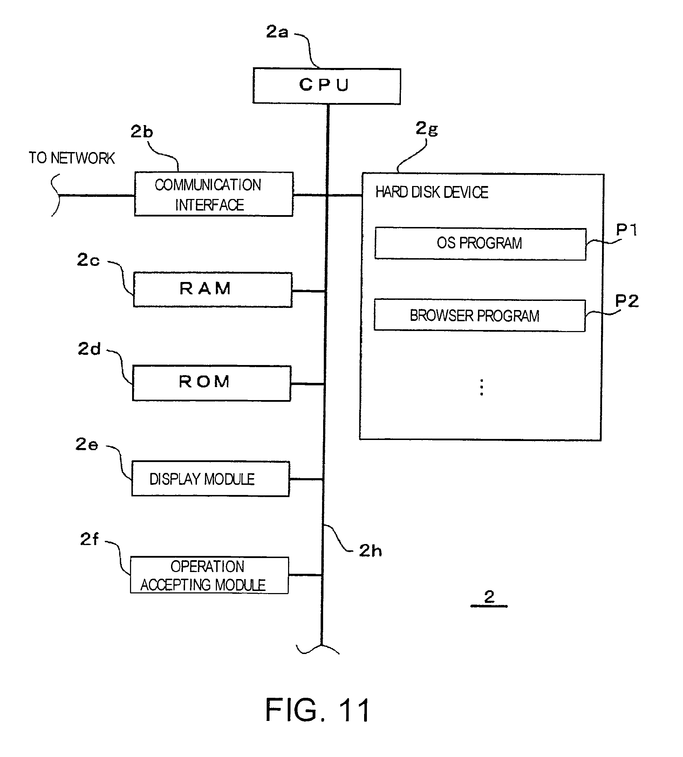

Fig. 11 shows the main internal configuration of the user computer 2. The user computer 2 is configured to have a CPU 2a, a communication interface 2b, a RAM 2c, a ROM 2d, a display module 2e (which corresponds to a display panel, or the like and performs displaying various screen images such as the blog page screen image), an operation accepting module 2f (corresponding to a keyboard, a mouse, a track pad, etc.), and a hard disk device 2g coupled with each other via an internal bus 2h. Each of the functions of the CPU 2a to the hard disk device 2g and the like are the similar to those of the servers 11, 21, 31, and the like described above.

Further, the hard disk device 2g stores an OS program P1, a browser program P2, and the like. The OS program P1 is a program which defines contents relating to an operating system for the personal computer. Moreover, the browser program P2 defines display processing of the data described in the markup language on the basis of the various websites and the like, and allows the various processing related to the description to be executed on the browser if the language to be displayed includes the script-based language (e.g., a description in JAVA (registered trademark) script). With such a definition by the browser program P2, the user of the user computer 2 can create and view the blog through the browser screen image processed by the browser program, and the like.

Next, a description is given of the processing of the blog creating system 1 according to the embodiment in a case when the user using the user computer 2 among the above described user computers 2 to 4, the user creates a blog in which the content (news article and news image) posted on the website distributed by the content site system 10 is reprinted. Note that, it is assumed that the user of the user computer 2 (corresponding to a first user) has registered in advance on the blog creating service provided by the blog system 30 of the company A (user ID "00001").

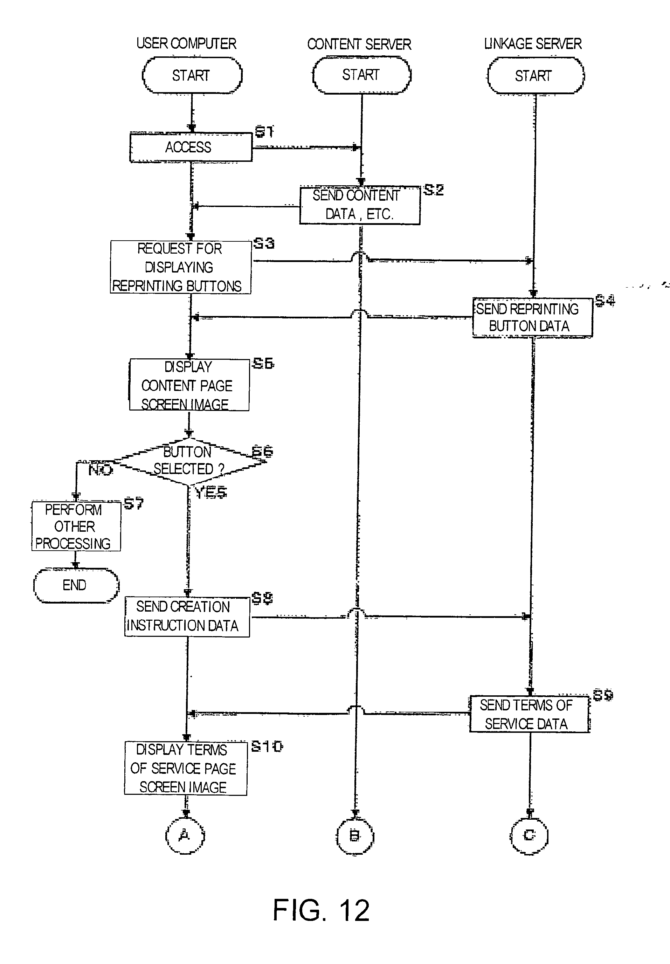

Each of the flowcharts illustrated in Fig. 12 to 15, illustrates a processing procedure (corresponding to a processing step of the method for creating a web page) when the blog is created by the blog creation system 1. Hereinafter, the process flow in the case of creating the blog in the user computer 2 will be described according to the flowcharts. First, the user computer 2 initiates the browser program P2 according to the operation instruction by the user to access the content server 11 in order to display the desired content page (news article page) of the website distributed by the content site system 10 (S1). Note that, the access is executed by the user computer 2 based on a URL of the news article page desired by the user.

When accessed by the user computer 2, the content server 11 reads out the data of the news article page (e.g., the first content page data 16a) from the site database 14 on the basis of the URL related to the access, as well as the content data related to the news article page (e.g., the first content data 17a), the content accompany data and the like from the content database 17 to send the read out data to the user computer 2 (S2). According to the description content included in the received content data, the user computer 2, when displaying the website related to the content page data (content page screen image) sent from the content server 11, sends the request data (corresponding to the part request data) related to displaying the reprinting button to the linkage server 21 (S3). The linkage server 21, upon receiving the request data, reads out the reprinting button data from the link database 28 of the hard disk device 21g to send the reprinting button data to the user computer 2 which is the sender of the request data (S4). The user computer 2 performs the display processing of each data sent from the content server 11 and the linkage server 21 to display the content page screen image 6 on the browser as shown in Fig. 3 in which the blog buttons 7a to 7c are laid out slightly lower than the center therein (S5).

Next, the user computer 2 determines whether or not the company A blog button 7a laid out in the content page screen image 6 accepts the selection of the company A blog button 7a by the user's selection operation at the operation accepting module 2f while displaying the content page screen image 6 (corresponding to the website related to the content) (S6). The user computer 2 performs other processing different from the subject of the present invention (S7) if the selection of the company A blog button 7a is not accepted (S6: NO). Note that, the description of the processing in the case of proceeding to S7 and the subsequent processing (denoted with "end" in the flowchart, and is the similar for the following description) is omitted.

On the other hand, if the selection of the company A blog button 7a (corresponding to the creation instruction for the blog page reprinting the content) is accepted (S6: YES), the user computer 2 sends the creation instruction data including the article ID indicating the content (news article content) laid out in the content page screen image 6, the destination data of the access for accessing the content server 11, and the blog site ID related to the blog server 31 of the company A, to the linkage server 21 which is to be the destination of the link of the company A blog button 7a (S8).

The linkage server 21 reads out the terms of service page data 24b upon receiving the creation instruction data, and sends the terms of service page data 24b to the user computer 2 which is the sender of the creation instruction data (S9). The user computer 2, upon receiving the terms of service page data 24b, displays the terms of service page screen image 26 on the browser as shown in Fig. 5(a) (S10). The user computer 2 determines whether or not the selection of the agreement button 26b of the terms of service page screen image 26 is accepted (S11). If the selection of the agreement blog button 26b is not accepted (S11: NO), the user computer 2 performs other processing different from the subject of the present invention (S12), and a description of the processing in the case of proceeding to S 12 and the subsequent processing is omitted.

Further, if the selection of the agreement button 26b is accepted (S11: YES), the user computer 2 sends the return data indicating that the terms of service have been agreed upon, to the linkage server 21 (S13). The linkage server 21, sends the request data (request data specified with the article ID) for the content data corresponding to the article ID included in the creation instruction data sent at the step of S8, upon receiving the return data, based on the destination data of access to the content server 11 included in the creation instruction data, and thereby, requests the content server 11 for the content on the basis of the article ID (S 14). The content server 11, upon receiving the request data for the content from the linkage server 21, reads out the data relating to the content corresponding to the article ID specified by the request data (for example, the first content data 17a including the trackback URL for the trackback to the content page screen image 6 shown in Fig. 3, the content accompany data, and the like) from the hard disk device 11g to send the read out content data and the like to the linkage server 21 (S15).

The linkage server 21, upon receiving the content data including the content accompany data and the like, creates script description data in which the processing of reprinting the content data is described in the script language (S16), and creates the reprinted description data in the XML form in which the entire linkage processing including the script description data is described (S17). Then, the linkage server 21 stores the received content data (including the content accompany data), the reprinted description data of the received content data, and the trackback URL which are made to correspond to article ID on the basis of the step of S 14 in the collected content database 25 (see Fig. 6) (S 18).

Then, the linkage server 21 sends the article ID made to correspond to the content data, the reprinted description data, and the like which are stored in the collected content database 25, along with the various pieces of data (the address data of the user computer 2 and the like) to the blog server 31 corresponding to the blog service of the company A specified by the user at the time of the creation instruction (corresponding to the blog server identified by the blog site ID) by referring to the blog server address associated with the blog site ID relating to the blog server 31 acquired at the step of S8 from the link database 28 (S 19). The blog server 31, upon receiving the article ID and the like, reads out the user confirmation page data 34a from the site page database 34 to send the user confirmation page data 34a to the user computer 2 by referring to the address data of the user computer 2 (S20).

The user computer 2 displays the user confirmation page screen image 37 shown in Fig. 8(a) on the browser, upon receiving the user confirmation page data 34a (S21). Then, the user computer 2 determines whether or not the selection of the login button 37c is accepted, with the condition in which the ID entry field 37a and password entry field 37b of the user confirmation page screen image 37 are entered with predetermined characters (S22). If the selection of the login button 37c is not accepted (S22: NO), the user computer 2 performs other processing different from the subject of the present invention, and the description of the processing in the case of proceeding to S23 and the subsequent processing is omitted.

Further, if the selection of the login button 37c is accepted (S22: YES), the user computer 2 sends the user ID entered in the ID entry field 37a and the password entered in the password entry field 37b to the blog server 31 (S24). The blog server 31, upon receiving the user ID and the password, determines whether the user ID and the password match by referring to the user database 35 shown in Fig. 10 (S25). If the user ID and the password do not match (S25: NO, including the case where the user ID is not included in the user database 35), the blog server 31 performs other processing different from the subject of the present invention (S26), and the description of the processing in the case of proceeding to S12 and the subsequent processing is omitted.

On the other hand, if the user ID and the password match (S25: YES), the blog server 31 sends the user ID along with the user blog URL made to correspond to the user ID to the linkage server 21 (S27). The linkage server 31, upon receiving the user ID and the like from the blog server 31, sends predetermined data (a URL of the content data which corresponds to the content address, a URL of the content accompany data, a URL of the reprinted description data, the article summary data, the small sized image data, the copyright information, etc.) related to the content accompany data and reprinted description data which are made to correspond to the article ID sent at the step of S 19 to the blog server 31 along with the trackback URL to the management page screen image 27 shown in Fig. 5(b) of the linkage server 21 and the trackback URL to the content page screen image 6 shown in Fig. 3 (the link data of the content page) (S28). The blog server 31, upon receiving the various pieces of data, embeds the URL (the URL of the content data corresponds to the content address indicating the storage location in the collected content database 25 of Fig. 6) of the content data (news images content data and news article content data) into the content address field 39c in the edit page screen image 39 of Fig. 9, creates the edit page data 34c with a condition in which a part of the content accompany data (the article summary data K1, the small sized image data G1 and the news title) is automatically embedded into the content field 39d, and sends the edit page data 34c to the user computer 2 (S29).

The user computer 2, upon receiving the edit page data 34c with the URL of the content data and the like being embedded, displays the edit page screen image 39 on the browser as shown in Fig. 9 (S30). Note that, the user computer 2 displays the edit page screen image 39 with the date and hour set by the OS program P1 (see Fig. 11) which is automatically embedded into the date and hour field 39b in the edit page screen image 39.

Then, the user computer 2 accepts, with the operation input by the user, the title entered in the title entry field 39a (the title of the blog page which is in process of creation, which is "Realizing the Forces of Nature" in the embodiment), and accepts the user's comment (which is an article of the blog page created by the user and is "I took a business trip to Tohoku today" in the embodiment) into the comment field 39e (S31). Then, the user computer 2 determines whether or not the selection of the save button 39f of the edit page screen image 39 is accepted by the user's selection operation (S32). If the selection of the save button 39f is not accepted (S32: NO), the user computer 2 performs other processing different from the subject of the present invention (S33), and the description of the processing in the case of proceeding to S33 and the subsequent processing is omitted.

Further, if the selection of the save button 39f is accepted (S32: YES), it means the blog page is created, and the user computer 2 sends the data accepted in the title entry field 39a and comment field 39e in the edit page screen image 39 with the operation input by the user, and the data which is automatically embedded in the date and hour field 39b, the contents address field 39c, and the like (data of the content address, etc.) to the blog server 31 (S34). The blog server 31 stores the data received from the user computer 2 in the user blog folder (for example, the first user blog folder 36a) of the blog database corresponding to the user ID sent from the user computer 2 at the step of S24 on a date and hour basis as the data relating to the created blog page (S35). Thereafter, the blog server 31 sends the user blog URL (corresponding to the page address of the created blog page) on the basis of the user blog folder stored at this time along with the stored title as the trackback to the content server 11 and the linkage server 21, respectively, based on the trackback URL (the site address of the website related to the contents) to the content page screen image 6 of Fig. 3 which is made to correspond to the article ID to be processed at this time in the collected content database 25 and the trackback URL to the management page screen image 27 of Fig. 5(b) (S36).

The content server 11, upon receiving the trackback, as shown in Fig. 3, adds the matters relating to the received trackback (in which the user blog URL is linked and the phrase "Realizing the Forces of Nature" corresponding to the title of the blog page and the like are laid out in selectable positions) in the trackback field 8 at a lower portion in the content page screen image 6. Further, the linkage server 21, upon receiving the trackback, also similarly adds the matters relating to the received trackback (the title linked to the user blog URL) which are selectable, in the management page screen image 27 shown Fig. 5(b). In this way, by sending the trackback to the linkage server 21 besides the content server 11, the blog page created through the linkage processing by the linkage server 21 can be easily accessed from the management page screen image 27 of the linkage server 21, and the blog created through the linkage processing can be managed in the management page screen image 27.

Note that in the blog creating method in the flowcharts of Figs. 12 to 15 described above, the description is given in the case where the user of the user computer 2 uses the blog server 31 of the company A; however, the similar processing is also applied to the case where the user of the other user computers 3, 4, and the like uses the blog server 41 of the company B or the blog server 51 of the company C, for example, the user desiring to use the blog server 41 of the company B may select the blog button 7b of the company B in Fig. 3. Accordingly, with the present invention, in the case where the website introducing the content and a plurality of blog creating sites linking to provide the blog creating service which is able to reprint the content to the user, the linkage processing by the linkage server 21 can pass the processing smoothly to the blog server of each of the blog creating sites and can suitably process the linkage of the services provided by the companies through the linkage processing in an integrated fashion.

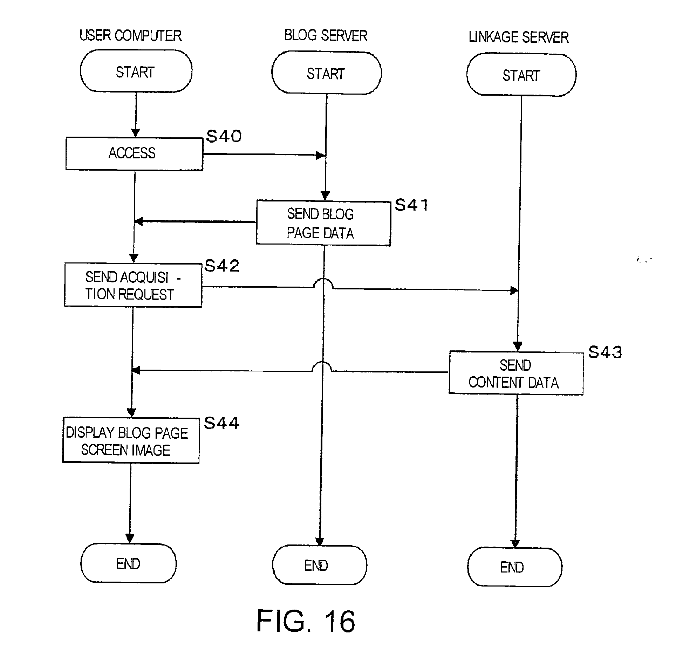

Next, a description is given of a processing procedure in a case where the created web page is displayed at the view requesting source (user computer) in response to the viewing request (a part of the processing of creating the web page). This description is given of a case where the user of the user computer 4 (corresponding to the viewing terminal device) desires to view the blog page of the first user (the user of the user computer 2) created by the blog creating method according to the flowcharts of Figs. 12 to 15, based on the flowchart in Fig. 16.

As shown in the flowchart of Fig. 16, first, the user of the user computer 4 initiates the browser program and sends the request to view for viewing a predetermined blog page (e.g., the blog page of the first user) to the blog server 31 by performing operations such as directly inputting the user blog URL, selecting from a search result of a search site, selecting a bookmark, selecting a title relating to the trackback at the website where the track bask is laid out and the like to access the blog server 31 (S40). The blog server 31, upon receiving the viewing request, refers to the user blog URL related to the viewing request, and reads out the appropriate blog page data (including the comment, the content address, etc.) from the first user blog folder 36a of the blog database 36 to send to the user computer 4 (S41).

The user computer 4, upon receiving the blog page data, refers to the content address (URL of the news image content data and news article content data) included in the blog page data, and sends the acquisition request for the content data relating to the blog page to the linkage server 21 (S42). The linkage server 21, upon receiving the acquisition request, reads out the news image content data and news article content data corresponding to the URL of the content data relating to the acquisition request, the content accompany data, and the like from the collected content database 25 to send them to the user computer 4 (S43).

The user computer 4, upon receiving the respective content data and the like from the linkage server 21 as well as receiving the blog page data from the blog server 31, displays the received data all together on the browser to display the blog page relating to the request to view (S44).

Fig. 17 shows a blog page screen image 60 of a blog page displayed on the browser being operated by the user computer 4 after completing the processing shown in the flowchart in Fig. 16 described above. This blog page screen image 60 has a title 60a of blog article ("Realizing the Forces of Nature") and a creation date of blog page (March 3, 2008) which are laid out at the upper portion, and the news title 6d, the news image 6b (the content image corresponding to the news image content data), the copyright information 6c, and the news article 6e (the content article corresponding to the news article content data) which are laid out at the middle portion. Further, the blog page screen image 60 has a comment 60c laid out at the lower potion which is inputted by the user in the comment field 39e of the edit page screen image 39, showing the personal blog contents of the user. Therefore, the user of the user computer 4 can view and enjoy the displayed blog page screen image 60.

Note that, in the above description, the case where the user computer 4 displays the blog page corresponding to the blog page data stored in the blog server 31 is described; however, the processing is also the similar for the case where the other user computers 2, 3, and the like display the blog page corresponding to the blog page data stored in the blog server 31. Further, the processing content described above is also the similar in the case where the user computers 2, 3, 4, and the like display the blog page corresponding to the blog page data stored in other blog servers 41 and 51. Moreover, the screen image equivalent to the above described blog page screen image 60 may also be displayed in the case where the selection of the confirmation button 39e laid out in the edit page screen image 39 of Fig. 9 is accepted through the processing similar to at the step of S42 and the subsequent steps in the flowchart of Fig. 16, thereby the user enabling to confirm how the matter being edited in the edit page screen image 39 is displayed in the actual blog page screen image.

The first embodiment of the present invention described above is not limited to these examples, and various modified examples may be considered. For example, the subject matters of the first embodiment can be also applied to the case where the website distributed by the content server 11 of the content site system 10 limits the content usable for the blog to only an image (still image or movie), or to only an article (characters). Further, as for the blog creation, the number of companies providing the blog creating service and cooperating with the company of the content site system 10 is not limited to three as shown in Fig. 1, and the number thereof is not particularly limited. Additionally, in the above described embodiment, the processing related to the systems 10 to 50 shown in Fig. 1 are performed by the servers 11, 21, 41, and 51 in the systems respectively; however, each system may be adequately provided with a plurality of servers which are made to perform a distributed processing. Further, if the processing is simplified, the processing related to the various pieces of data (the copyright information, etc.) handled as the content accompany data may be omitted.

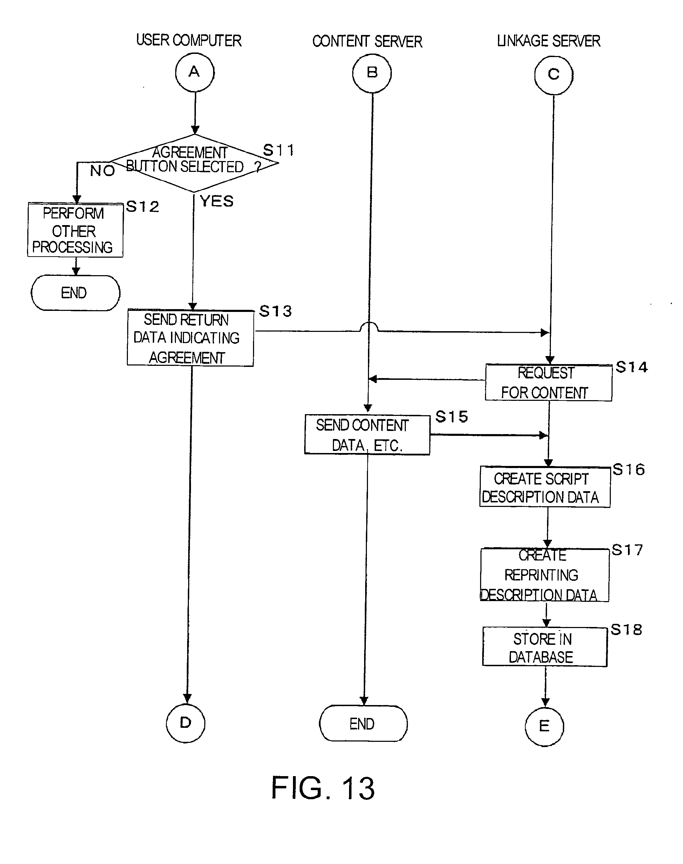

Moreover, the content data of the content usable for the blog may be held in the content server 11, and thereafter, distributed by the content server 11 to the destination where it is to be displayed by the user computer when displaying the created blog page; thus, improving the management of the content data. In this case, only the content server 11 has the content database 17 holding the content data, the content accompany data, and the like, and the collected content database 25 of the linkage server 21 stores only the reprinted description data respectively for each article ID, which is different from the matters shown in Fig. 6. Further, instead of sending the content data (the image data and the news article data) from the content server 11 to the linkage server 21, as shown in the step of S15 in the flowchart of Fig. 13, the URL (content address) indicating the storage location of the content data (the data enabling to the content reprinted on the blog) in the content database 17, and the URL indicating the storage location of the content accompany data and the like are sent along with the article ID (content identification data) (however, the content accompany data, the small sized image data, and the like are sent from the content server 11 to the linkage sever 21). Further, the content address field 39c in the edit page screen image 39 of Fig. 9 is automatically embedded with the URL indicating the storage location of each content data in the content database 17 which the content server 11 has (e.g., http://contents_s erver.jp/gazou/gazou_1, http:// contents_serverb.jp/kiji/kiji_1).

Therefore, in the modified example described above, the URL indicating the storage location of the content data included in the data of the created web page indicates, of course, the storage location in the content database 17 of the content server 11. Accordingly, in the blog viewing by the user computer in the case of the modified example, the linkage server 21 is replaced with the content server 11 in the flowchart shown in Fig. 16, and the user computer 2 sends the acquisition request for the content to the content server 11 at the step of S42, and the content server 11 sends the content data and the like to the user computer 2 at the step of S43.

Moreover, in the above description, the blog buttons 7a to 7c laid out in the content page screen image 6 shown in Fig. 3 are displayed based on the reprinting button data 26 sent from the linkage server 21. However, the description in the script-based language may be contained in advance in the content page data corresponding to the content page screen image 6 so as to lay out the blog buttons 7a to 7c (however, also in this case, it needs to be mentioned that the function for the time when the blog buttons 7a to 7c are selected is similar to the above). In this case, the linkage server 21 may eliminate the sending processing of the reprinting button data 26 and the like, therefore, reducing the processing load of the linkage server 21. On the other hand, in the case where the linkage server 21 sends the reprinting button data 26 to the user computer to display the blog buttons 7a to 7c so as to be laid out in the content page screen image 6, there is a merit that the content page data corresponding to the content page screen image 6 may include little description relating to the blog buttons 7a to 7c, suppressing the load on the side of the content server 11 to achieve the present invention.

Further, a bookmarklet is used; thus, a modified example may be considered in which the blog buttons 7a to 7c may be omitted from being displayed in the content page screen image 6. In this modified example, before performing the processing of the flowcharts shown in Figs. 12 to 15, a registration to the bookmarklet of the blog creating service that the user uses is necessary on the user computer.

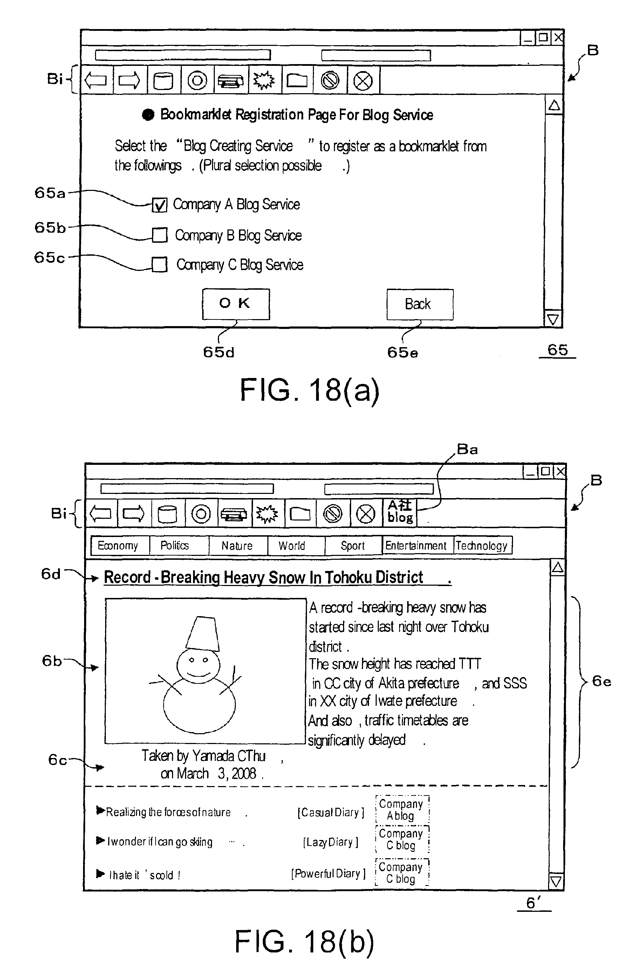

Fig. 18(a) shows a bookmarklet registration screen image 65 displayed on the display module of the user computer. The registration screen image data on the basis of the bookmarklet registration screen image 65 is saved in the page database 24 of the hard disk device 21g by the linkage server 21, and includes a description (corresponding to a display definition data) which defines to display a blog icon button Ba (corresponding to an instruction accepting part) shown in Fig. 18(b) which is incorporated in the browser screen image. Note that, the bookmarklet registration screen image 65 is displayed on the user computer having accessed the linkage server 21 in such a manner the link button and the like to the bookmarklet registration screen image 65 is provided to the top page screen image or management page screen image 27 of Fig. 5(b) of the linkage server 21 or the like. Further, subsequently to the bookmarklet registration screen image 65 of Fig. 18(a), a terms of service screen image of the bookmarklet can also be adequately displayed of course.

The bookmarklet registration screen image 65, when the registration screen image data thereof is received by the user computer, is displayed via the browser program activated by the user computer, and has check boxes 65a to 65c for selecting the blog creating services of the respective companies to be registered, an OK button 65d, and a back button 65e. If the OK button 65d is selected in a state of any one of the check boxes 65a to 65c being checked by the user operation, according to the description (description content corresponding to the display definition data) included in the registration screen image data of the bookmarklet registration screen image 65, the blog button corresponding to the checked blog creating service is added to an icon column arranged on the upper portion of the browser screen image. Note that, if the back button 65e is selected, the displayed matter is switched to the top page screen image or management page screen image 27 of the linkage server 21, or the like. The functions of these check boxes 65a to 65c, the buttons 65d and 65e, and the like are achieved by the description content in the registration screen image data corresponding to the bookmarklet registration screen image 65.

Fig. 18(b) shows a content page screen image 6' displayed via the browser screen image B in which the blog icon button Ba (corresponding to the instruction accepting part) registered through the registration operation of the bookmarklet on the bookmarklet registration screen image 65 of Fig. 18(a) is incorporated. The browser screen image B in Fig. 18(b) is characterized by laying out the blog icon button Ba of the company A in the icon column Bi in which the various icon buttons are aligned compared with the browser screen image B shown in Fig. 3. The blog icon button Ba is displayed in the icon column Bi in conjunction with the function of the browser program of the user computer when the OK button 65d is selected on the bookmarklet registration screen image 65 of Fig. 18(a) in the state of the check box 65a corresponding to the company A blog service being checked.

The blog icon button Ba of the company A has the similar function to the blog button 7a of the company A laid out in the content page screen image 6 of Fig. 3. Specifically, when the selection operation of the blog icon button Ba is performed by the user, the creation instruction data accompanied by the blog site ID, the article ID, and the like relating to the blog server 31 of the company A is sent to the linkage server 21 of the destination of the link, and the processing like this is achieved by describing the matters of the data on the basis of the blog icon button Ba in the script-based language. Note that, the location the blog icon button Ba of the company A is laid out is shown in Fig. 18(b); however, when another check box 65b or 65c is selected at the bookmarklet registration screen image 65 of Fig. 18(a), the blog icon button of the company B or company C is displayed in the icon column Bi in the browser screen image B of Fig. 18(b).

Further, in the content page screen image 6' in the modified example, the blog buttons 7a to 7c of the respective companies are omitted from the content page screen image 6 of Fig. 3. Additionally, in the processing flow in the modified example applied with the bookmarklet such as this, before performing the processing shown in the flowchart of Fig. 12, the blog icon button of any one of the companies is registered in the icon column Bi in the browser screen image B according to the bookmarklet registration screen image 65 of Fig. 18(a), and in the flowchart of Fig. 12, the steps S3 and S4 are omitted and the content page screen image 6' as shown in Fig. 18(b) is displayed in the browser screen image B at the step of S5. After that, the determination of whether the selection of the blog icon button Ba laid out in the icon column Bi by the user operation is accepted or not corresponds to the step of S6 in the flowchart of Fig. 12, and the steps following the step of S6 are similar to the procedure shown in the respective flowcharts.

Note that, in another way than the one described above, the incorporation of the blog icon button Ba relating to the bookmarklet into the icon column Bi of the browser screen image B can be performed as shown in Fig. 18(B) by the user operation according to the function of "favorites" provided to a general browser program based on the display definition data relating to the blog icon button Ba. In addition, the registration screen image including the link corresponding to the display definition data relating to the blog icon button Ba may be displayed on the user computer, and the blog icon button Ba may be incorporated in the icon column Bi of the relevant browser screen image B by designating a drop point in the icon column Bi of the relevant browser screen image B by dragging and dropping the link in the registration screen image by the user.

As described above, in the modified example using the bookmarklet, the blog page data provided by the content server 11 does not have to be added with special matters; thus, the introduction of the blog creating services of the respective companies for creating the blog having the content reprinted thereon can be more facilitated. That is, even if the company managing the content site system 10 with the content server 11, and the company providing the blog creating service do not cooperate with each other, there is a merit that the comprehensive blog creating service can be easily established since the processing up to the blog creation can be performed from a technical aspect. Further, in the modified example, as the importance of the linkage server 21 is increased, usage frequency of the management page screen image 27 shown in Fig. 5(b) with which the user uses the bookmarklet registration screen image 65 of Fig. 18(a) is also increased; thus, the service content may be extended so that the management page screen image 27 is provided with a community field for the user and the like.

Alternatively, as another modified example, there is considered that a one-time trackback URL which is valid for only one time is issued so that the unnecessary trackback (for example, a trackback having a purpose for an advertisement like a spam) is eliminated from the management page screen image 27 of Fig. 5(b), and the content page screen images 6 and 6' of Fig. 3 and Fig. 18(b) respectively. The one-time trackback URL is obtained by adding to the end of the URL (corresponding to a fixed address part) of the website as a destination of the trackback a character string generated at random (corresponding to a variable address part, for example, 18U9LK22, and the like). The server device relating to the website as the destination of the trackback issues a one-time trackback URL like this, and when a trackback is done with the issued one-time trackback URL, the trackback is accepted only one time and is not accepted again.

Such a one-time trackback URL is used instead of the normal trackback URL in the processing described above. Specific processing in the modified example using the one-time trackback URL is described hereafter. First, in the content server 11, the site processing program 13 stored in the hard disk device 11g defines processing for generating a random character string when the acquisition request for the content is received, and processing for adding the generated character string to the end of the normal trackback URL for the content page to generate the one-time trackback URL (corresponding to the site address). Further, the site processing program 13 defines processing for making the generated one-time trackback URL to be included in the data relating to the content to send to a destination of the acquisition request for the content, and processing for temporarily storing the generated one-time trackback URL in the RAM 11c or the hard disk device 11g.

Moreover, the site processing program 13 also defines that when a title or the like linked to the page address of the blog page is received as the trackback with an access from the blog server (e.g., the blog server 31) based on the one-time trackback URL, whether or not the same URL with the URL relating to the trackback (corresponding to the site address to be the destination of the trackback) used for the access is temporarily stored is searched by comparing, and if the both URLs to be searched by comparing match, the title or the like relating to the trackback is accepted to be added to the web page screen image as the trackback of the content page on the basis of the URL of a head part of the random character string, and the one-time trackback URL temporarily stored is deleted. In addition, the site processing program 13 defines, if the URLs to be searched by comparing do not match as the result of the above comparison, the trackback is not accepted.

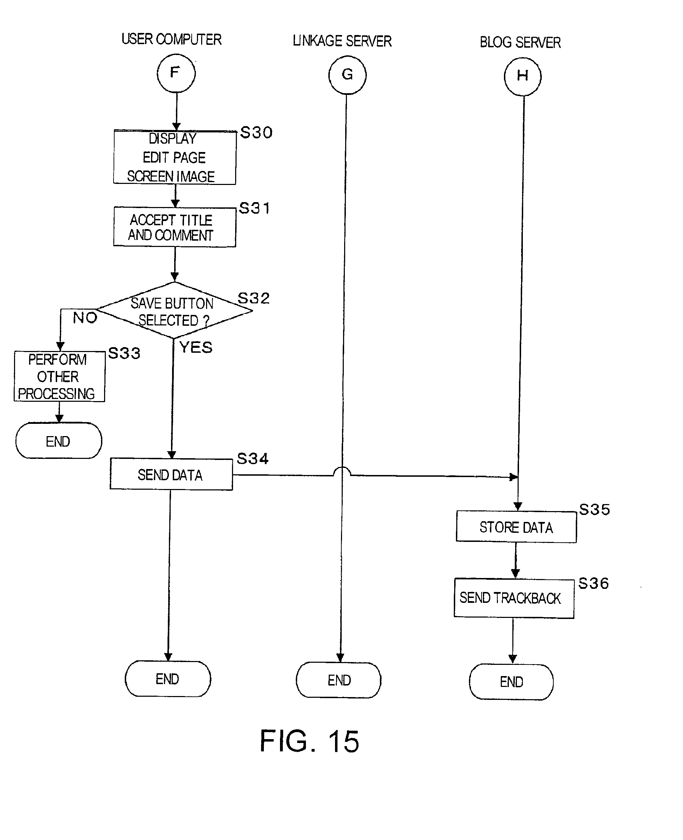

According to the definition of the site-processing program 13 like this, the content server 11 in the modified example using the one-time trackback URL performs generating, sending and temporarily storing the one-time trackback URL at the step of S15 of the flowchart shown in Fig. 13. The content server 11, upon receiving the trackback from the blog server 31 on the basis of the step at S36 of the flowchart shown in Fig. 15, performs searching by comparing the one-time trackback URL relating to the trackback with the temporarily stored one-time trackback URL, accepting the trackback in the case of both matching, rejecting the acceptance of trackback in the case of both not matching, deleting the temporarily stored one-time trackback URL in the case of the both matching, and the like.

On the other hand, in the modified example using the one-time trackback URL, the linkage processing program 23 stored in the linkage server 21 also defines the processing about generating, temporarily storing, searching by comparing of the one-time trackback URL, and the like. That is, the linkage processing program 23 in the modified example defines the processing of, upon receiving the user ID, similarly to the above described site processing program 13, generating the random character string, adding the generated character string (corresponding to the variable address part) to the end of the normal trackback URL of the management page screen image 27 (corresponding to the fixed address part) to generate the one-time trackback URL, temporarily storing the generated one-time trackback URL, and the like. Further, the linkage processing program 23 in the modified example defines the processing of, upon receiving the trackback, also in this case, similarly to the above described site processing program 13, searching by comparing the URL relating to the trackback with the stored one-time trackback URL.

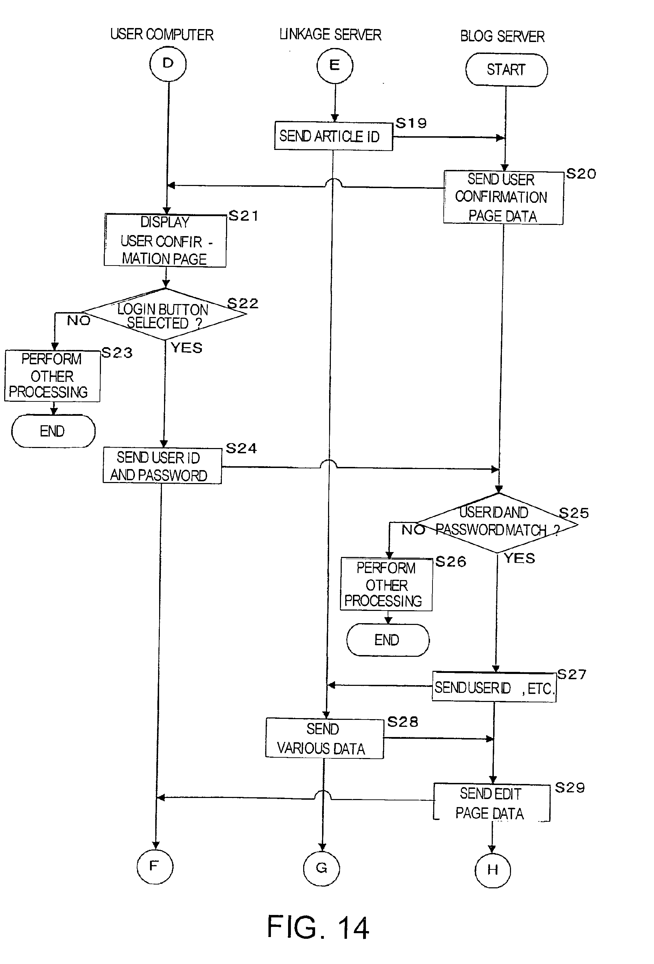

According to the definition of the linkage processing program 23 relating to the modified example like this, the linkage server 21 in the modified example using the one-time trackback URL performs the generating, sending and temporarily storing of the one-time trackback URL at the step of S28 of the flowchart shown in Fig. 14. The linkage server 21, upon receiving the trackback from the blog server 31 in the step at S36 of the flowchart shown in Fig. 15, performs comparison processing, accepts the trackback in the case of both matching, and rejects the acceptance of the trackback in the case of both not matching, in the similar manner to the content server 11. With the processing like this being performed, even if the trackback is sent in conjunction with the creation of the blog page having the content reprinted thereon, the immaterial trackback can be prevented from being posted on the content page screen image 6 shown in Fig. 3 and the like and the management page screen image 27 shown in Fig. 5(b), contributing to maintain the quality of the page screen images.

Note that as for the one-time trackback URL, it may be that, besides temporarily storing the issued one-time trackback URL as described above, the variable address part of the one-time trackback URL may be generated based on the result of calculation by a certain calculating formula (for example, a calculating formula with a content in which a certain character string is converted based on a predetermined condition to be encoded), and if the trackback is performed, the variable address part included in the URL relating to the trackback may be decoded to determine whether or not having been generated by the relevant certain calculating formula. In this case, if determined that the variable address part of the URL relating to the trackback has been generated by the relevant certain calculating formula, the trackback is accepted, whereas if determined that the variable address part has not been generated by the relevant certain calculating formula, the trackback is rejected from being accepted.

Further, a processing procedure may be employed in which making a request for the content to the content server 11 every time at the step of S 14 of the flowchart shown in Fig. 13 may be omitted when the linkage server 21 uses the collected content database 25 in Fig. 6.

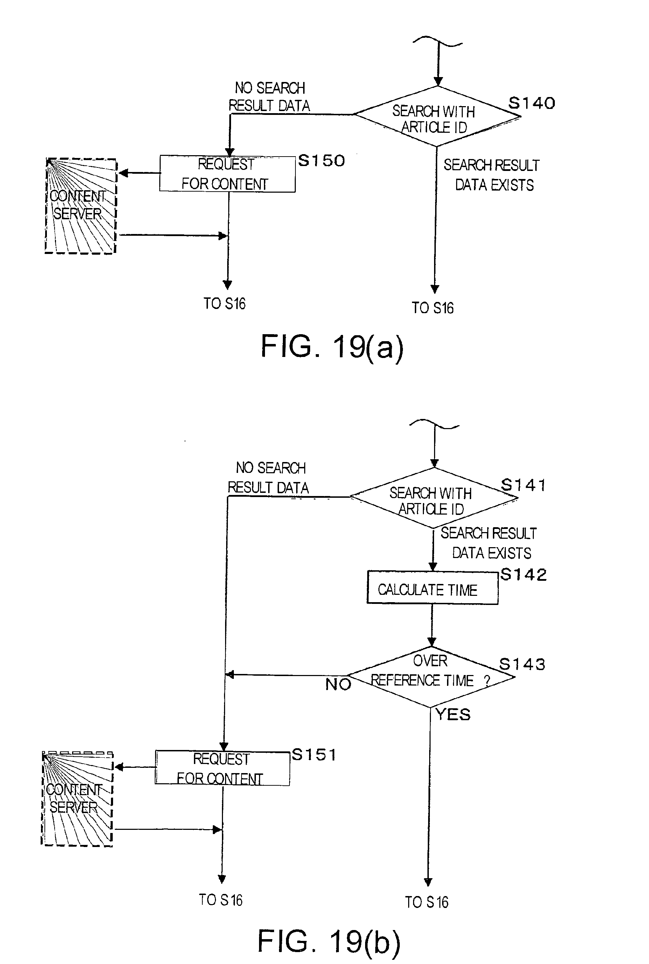

The flowchart shown in Fig. 19(a) shows a processing procedure making it possible to use the collected content database 25 in Fig. 6, which replaces the step of S 14 of the flowchart in Fig. 13. The processing content in the case of using the flowchart of Fig. 19(a) is described hereafter. First, the linkage server 21, upon receiving the return data from the user computer (e.g., the user computer 2), searches the content data (and the content accompany data, etc.) on the basis of the article ID included in the creation instruction data sent at the step of S8, from the collected content database 25 of Fig. 6 (S 140).

As the result of the searching, if the appropriate content data does not exist (S 140: no appropriate data), the linkage server 21 sends the request data for the content data on the basis of the above article ID to the content server 11 to request the content, similarly to the step of S14 in the flowchart of Fig. 13 (S150). Note that, in this case, the subsequent processing is the similar to the processing at S 15 in the flowchart of Fig. 13 and the subsequent thereof; therefore, the content server 11 sends the content data relating to the request and the like to the linkage server 21 and performs the subsequent processing in order.

On the other hand, as the result of the searching, if the appropriate content data exists (S140: the appropriate data exits), the linkage server 21, without sending the request data of the content to the content server 11, reads out the appropriate content data (and the content accompany data, etc.) from the collected content database 25. Then, the linkage server 21 performs the processing on the basis of the steps at S16 and S17 shown in the flowchart of Fig. 13 using the read out content data and the like, the processing on the basis of the step at the step of S 18 is omitted because the equivalent content data has been already stored in the collected content database 25, and thereafter, the processing of the flowcharts shown in Fig. 14, Fig. 15, and the like are performed to send at least the URL of the content data to the blog server 31 at the step of S28. In this way, with the processing shown in the flowchart of Fig. 19(a) being introduced, the collected content database 25 of the linkage server 21 can be efficiently utilized to minimize the request for the content to content server 11.

Further, if the target content is required to be fresh, to be updated frequently and vary in the content with the time elapse, or the like (in the case of the news content, etc.), the request for the content may be determined whether to be sent to the content server 11 with consideration for a period after the content is stored in the collected content database 25.

The flowchart shown in Fig. 19(b) shows a processing procedure in the case of the period stored in the collected content database 25 being considered. If the processing procedure is applied, any of the RAM 21 c, the ROM 21d, or the hard disk device 21g of the linkage server 21 stores in advance a reference time (for example, 240 hours corresponding to 10 days) as a comparison reference. The flowchart of Fig. 19(b) is based on the flowchart of Fig. 19(a), and the processing flow from the step of S141 to the step of S151 in Fig. 19(b) is the similar to the processing flow from the step of S140 to the step of S150 in Fig. 19(a).

Moreover, as the result of searching the content data on the basis of the target article ID from the collected content database 25, if the appropriate content data exists (S141: the appropriate data exits), the linkage server 21 calculates a time period from when the appropriate content data is stored in the collected content database 25 to the searching this time based on a difference between the storing date of storing in the collected content database 25 and a current date and hour from a clock-calendar function included in the CPU 21a or the like of the linkage server 21 (S142). Then, the linkage server 21 compares the calculated time with the reference time to determine whether or not the calculated time is over the reference time (S143).

If the calculated time is over the reference time (S143: YES), the appropriate content data is determined to be outdated and has the possibility of being updated and the like; thus, the linkage server 21 performs the request for the content to content server 11 (S151). On the other hand, if the calculated time is not over the reference time (S 143 : NO), the appropriate content data is considered to maintain the freshness, and the subsequent processing is the similar to the case where the appropriate data exists at S 140 in Fig. 19(a). As described above, if the comparison with the reference time is further performed, the collected content database 25 can be utilized with consideration for the stored period in the collected content database 25.

Additionally, the processing of the steps in the flowcharts shown in Fig. 14, Fig. 15, and the like may be performed in a changed order appropriately depending on the system or service to which the processing is applied. For example, the processing of steps from the step of S14 to S18 in Fig. 13 may be inserted after the step of S27 in Fig. 14 in order to allow the linkage server 21 or the like not to perform the useless processing as much as possible, even if the accessing user meaninglessly performs the selection operation of the blog buttons 7a to 7c in Fig. 3, the blog icon button Ba in Fig. 18(b), or the like.

In this case, the linkage server 21, upon receiving the return data sent at the step of S13 from the user computer, proceeds the processing to the step of S 19 to send the article ID and the like to the blog server 31. Further, when the linkage server 21 receives the user ID and the like sent at the step of S27 from the blog server 31, the blog creating system 1 is to perform the processing from the step of S 14 to the step of S 18 shown in Fig. 13; thereafter, the linkage server 21 is to perform the processing at the step of S28 in Fig. 14 (sending the various pieces of data). With the processing procedure like this, the primary processing of the linkage server 21 (processing from the step of S14) are performed after the user identification at the step of S25 in Fig. 14 is performed (after matching of the user ID and the password); thus, it prevents the linkage server 21 to perform the useless processing following the meaningless operation by the user.

In addition, as another modified example, the processing flow may be, instead of sending the article ID to the blog server 31 by the linkage server 21 at the step of S 19 in the flowchart shown in Fig. 14, with redirect processing of the browser program of the user computer, the article ID is sent from the user computer to the blog server 31.

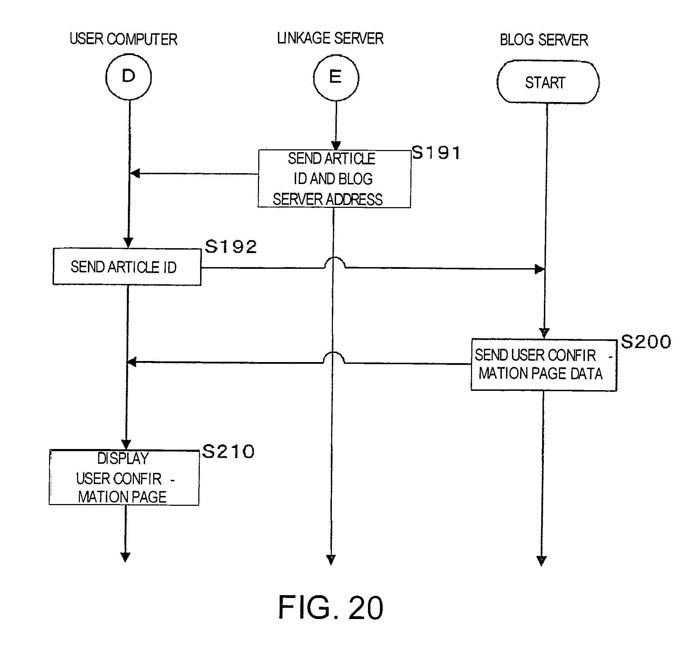

Fig. 20 shows the modified example of the processing content from the step of S19 to the step of S21 in the flowchart shown in Fig. 14, and shows a processing procedure of sending the article ID from the user computer. In this modified example, the linkage server 21, when storing the reprinted description data and the trackback URL in the collected content database 25 (see Fig. 6) at the step of S18 of the flowchart in Fig. 13, sends the article ID made to correspond to the stored reprinted description data and the like, and the blog server address read from the link database 28 (the blog server address associated with the blog site ID relating to the blog server 31 obtained at the step of S8 of the flowchart in Fig. 12) to the user computer 2 (S191).

The user computer 2, upon receiving the article ID and the blog server address from the linkage server 21, sends the article ID sent from the linkage server 21 to the blog server 31, based on the received blog server address, with the activated redirect processing of the browser program (S 192). The blog server 31, upon receiving the article ID, reads out the user confirmation page data 34a from the site page database 34 to send the user confirmation page data 34a to the user computer 2 by referring to the address data of the user computer 2 (S200). Then, the user computer 2, upon receiving the user confirmation page data 34a, displays the user confirmation page screen image 37 corresponding to the user confirmation page data on the browser (S210). After the step of S210, the processing similar to the processing at the step of S22 of the flowchart in Fig. 14 and the subsequent processing thereof are performed.

In addition, even at the step of S27 in the flowchart of Fig. 14, it is also possible to make the processing flow so that the blog server 31 sends the user ID to the linkage server 21 via the user computer instead of sending it to the linkage server 21 directly. Note that, the above described various modified examples may be applied in combination of course.

### Embodiment 2

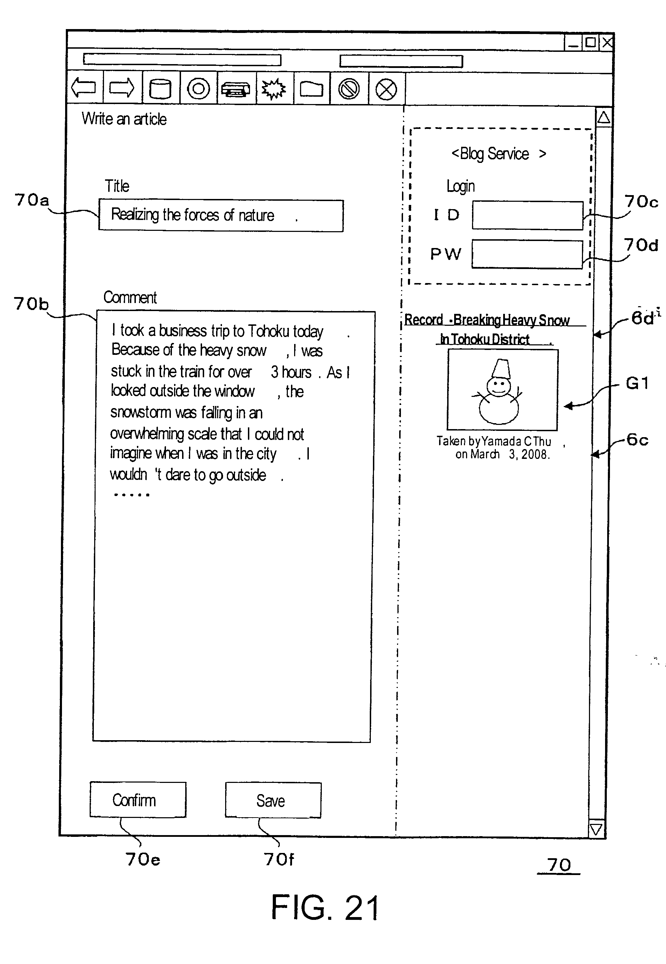

Fig. 21 shows the simplified edit page screen image 70 applied to the blog creation system of the second embodiment of the present invention. The second embodiment of the present invention is performed with the system configuration basically the similar to the system shown in Fig. 1; however, it is mainly different from the first embodiment in that the page screen image data on corresponding to the simplified edit page screen image 70 in Fig. 21 is sent from the linkage server to the user computer. The content of the second embodiment is described focusing on the point different from the first embodiment below. Note that, the second embodiment is the similar to the first embodiment in the basic configuration; thus, those common to the first embodiment are denoted with the same numerals and symbols with the first embodiment in the following description.

First, the simplified edit page screen image 70 shown in Fig. 21 is described. The page screen image data corresponding to this screen image 70, when being stored in the page database 24 of the linkage server 21 shown in Fig. 4 and being sent to the user computer creating the blog (e.g., the user computer 2), is displayed in the browser screen image activated in the user computer in the form shown in Fig. 21.

The simplified edit page screen image 70 includes a title entry field 70a on the upper portion in which the title of the blog page to be created is entered and a comment entry field 70b for accepting a user's comment (comment body), which are laid out on the lower portion thereof. Further, the simplified edit page screen image 70 has a user ID entry field 70c and a password entry field 70d laid out on the right portion of the title entry field 70a thereon to login the blog creating service (e.g., the blog creating service of the company A) registered by the user creating the blog page. Moreover, the simplified edit page screen image 70 has the news title 6d relating to the content to be reprinted, the small sized news image G1, and the copyright information 6c which are laid out on the lower portion than the password entry field 70d. Still further, the simplified edit page screen image 70 has a confirmation button 70e and a save button 70f which are laid out thereon. Note, that the simplified edit page screen image 70 has the content address to be reprinted (the content address of the news article, and the content address of the news image) embedded therein and not displayed, and the function thereof is simplified as compared with the edit page screen image 39 of the first embodiment shown in Fig. 9, for example, only the character entries are accepted in the comment entry field 70b, a function of embellishing the entered characters is omitted unlike the edit page screen image 39 in Fig. 9.

The simplified edit page data like this relating to the simplified edit page screen image 70 is stored in the page database 24 of the linkage server 21 as described above; however, the confirmation button 70e and the save button 70f are required to be related to the blog creating service registered by the user, thus, the data of the buttons (confirmation button 70e and save button 70f) for the site of the blog creating service of the respective companies is stored in the hard disk device 21g of the linkage server 21 which is made to correspond to the blog site IDs of the companies. Note that, the destination of the link in case of these buttons 70e and 70f being selected is the linkage server 21. Further, the button data relating to the save button 70f includes the description in which if the save button 70f is selected, the entered data accepted on the simplified edit page screen image 70 (the user's comment and the like) and the embedded data (content address and so on) are sent along with the address data for accessing the blog creating service (blog server) to the linkage sever 21 (description in the script-based language) and the like.

In addition, when the creation processing of the blog page is initiated, and the selection is accepted with any of the blog buttons 7a to 7c in Fig. 3, the linkage server 21 is to create the basic portion of the simplified edit page data for laying out the button for the blog server corresponding to the blog site ID included in the creation instruction data (e.g., the button for the blog server 31 relating to the blog creating service of the company A) based on the creation instruction data sent at the step of S8 of the flowchart in Fig. 12 from the user computer 2 (including the blog site ID relating to the blog server of the selected company).

Moreover, the linkage server 21, upon receiving, via the step of S 15 of the flowchart in Fig. 13, the content data, the content accompany data, and the like, performs the processing of the step at S16 to the step at S18 and then sends the simplified edit page data corresponding to the simplified edit page screen image 70 shown in Fig. 20 described above to the user computer creating (editing) the blog page (e.g., the user computer 2). Note that, the linkage server 21 embeds the URL (the content address) relating to the storage location of the content data to be reprinted and not displayed, and embeds the small sized news image, the news title, the copyright information, and the like which correspond to a part of the content data (the image data) so as to be displayed into the simplified edit page data to be sent, and then sends the simplified edit page data.

Further, the linkage server 21, upon receiving the user's comment and the like (the entered and accepted matters, the embedded matters, etc.) to be the content of the blog from the user computer which performs the blog creation processing, converts the data such as the received comment and the content address into a data format the blog server 31 can store, and then sends the converted data relating to the blog content (also including the user ID, the password, and the like) to the blog server corresponding to the blog site ID included in the creation instruction data sent at the step of S8 in Fig. 12 (e.g., the blog server 31 of the company A). Note that, such various processing specific to the linkage server 21 in the second embodiment is defined by the linkage processing program 23.

Further, the processing of the blog server 31 in the second embodiment is simplified as compared with that in the first embodiment, and upon receiving the data relating to the blog content including the user ID and the password from the linkage server 21, performs the step of S25 of the flowchart in Fig. 14 (determination whether the user ID and the password match), and if they match, stores the received data (the user's comment and the like to be the content of the blog) in the user blog folder corresponding to the user ID.

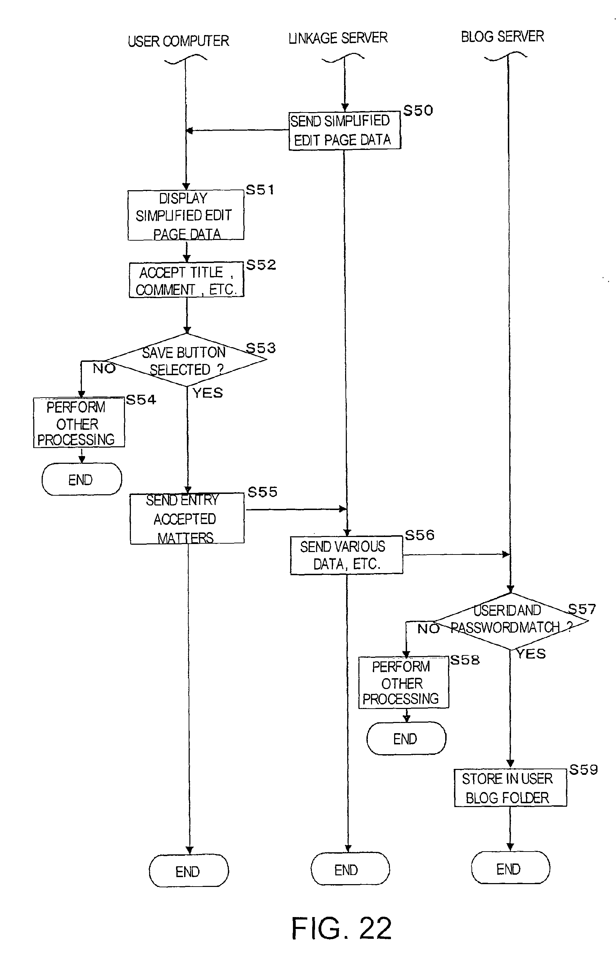

The flowchart shown in Fig. 22 shows the processing procedure of the second embodiment from the step where the linkage server 21 sends the simplified edit page data (the content of the creating method of the blog performed by the blog creating system related to the second embodiment). The flowchart shown in Fig. 22 follows the step of S18 of the flowchart in Fig. 13 of the first embodiment, and the primary content of the second embodiment is described according to the flowchart in Fig. 22 below. Note that, also in the second embodiment, similar to the first embodiment, it is assumed that the user of the user computer 2 uses the blog creating service provided by the company A to create the blog page.

First, the linkage server 21, when the processing procedure of the flowchart in Fig. 13 proceeds to the step of S 18, it generates the simplified edit page data and sends the simplified edit page data to the user computer 2 (S50). The user computer 2, upon receiving the simplified edit page data, displays the simplified edit page screen image 70 (see Fig. 21) corresponding to the received simplified edit page data in the activated browser screen image (S51). Then, the user computer 2 accepts the title, the comment, and the like relating to the blog entered with the user operation and accepts the user ID, the password, and the like entered (S52). Next, the user computer 2 determines whether or not the selection of the save button 70f of the simplified edit page screen image 70 is accepted (S53). If the selection of the save button 70f is not accepted (S53: NO), the user computer 2 performs other processing different from the subject of the present invention (S54), and the description of the processing after the step of S54 is omitted.

Further, if the selection of the save button 70f is accepted (S53: YES), the user computer 2 sends the entered matters (the title, the comment, the user ID, the password, etc.) accepted on the simplified edit page screen image 70 and the content address or the like relating to the embedded content data along with the access data for the blog server 31 to the linkage server 21 of the destination of the link of the save button 70f (S55). The linkage server 21 converts the received title, the comment, and the like into the data in a saving format, sends the various pieces of data (the converted data, the user ID, the password, etc.) to the blog server 31 with referring to the blog server address associated at the link database 28 with the blog site ID included in the creation instruction data sent at the step of S8 in Fig. 12 (S56). The blog server 31, upon receiving the various data and the like, determines whether the user ID and the password included in the received data match by referring to the user database 35 shown in Fig. 10 (S57). If the user ID and the password do not match (S57: NO), the blog server 31 performs other processing different from the subject of the present invention (S58). The description of the processing after the step of S57 is omitted.

On the other hand, if the user ID and the password match (S57: YES), the blog server 31 stores the comment data and the like in the user blog folder (for example, the first user blog folder 36a) of the blog database on the basis of the user ID (S59). After that, similar to the first embodiment, the blog server 31 sends the user blog URL corresponding to the user blog folder in which the comment data and the like is stored with the data this time along with the stored title as the trackback to the content server 11 and the linkage server 21 referring to the URL of the news article page reprinted on the blog of the content server 11 and the URL of the management page of the linkage server 21 (see the step of S36 of the flowchart in Fig. 15).

In the second embodiment, as described above, since the linkage server 21 sends the simplified edit page data, an entire processing amount relating to the blog page creation can be reduced as compared with the first embodiment, achieving more efficient processing. Note that, in other parts than the above description in the second embodiment are the similar to those of the first embodiment, and the various modified examples described in the first embodiment can also be applied to the second embodiment (the various modified examples of the first embodiment can also be combined to be applied). Particularly, in the case of the modified example where the content data of the content usable for the blog is held in the content server 11 and the created blog page is distributed, only when being displayed, to the user computer of the destination of displaying, the content server 11 has the content database 17 having the content data, the content accompany data, and the like stored therein, the URL (content address) representing the storage location of the content data in the content database 17, the URL representing the storage location of the content accompany data and the like are sent to the linkage server 21, and the linkage server 21 sends the data of the simplified edit page screen image embedded with these URLs, a part of the content data, and the like embedded therein to the user computer.

Further, in the case where the matter entered on the simplified edit page screen image 70 in Fig. 21 and the like are required to be embellished similar to the first embodiment, the processing at the step of S57 of the flowchart in Fig. 22 (determination whether the user ID and the password match) is performed, and if they match, the edit page data 34c embedded with the received various pieces of data and the like is sent to the user computer 2, and the user computer 2 displays the edit page screen image 39 corresponding to the received edit page data 34c, performs the various embellishing processing, and then resends the page screen image 39 to the blog server 31, which blog server 31 may store the received data in the user blog folder. In this way, since the character can be embellished and the like in the edit page screen image 39, an appearance of the blog page can be made as the user desires, similar to the first embodiment.

### INDUSTRIAL APPLICABILITY

The present invention is, by newly providing the linkage server for performing the processing of linking the user computer, the web server, and the blog server, preferable to an application where, when the user creates the blog (web page) by reprinting the content included in the website distributed from the web server, the blog creating service registered by the user can be smoothly used among a plurality of blog creating services.

## Claims

1. A method of creating a web page, comprising:
displaying a website including a content obtained in such a manner in which a communication terminal device accesses a first server device storing content data of the content, the content data being made to correspond to content identification information; and
performing processing relating to a creation of a web page having the content reprinted thereto, by the communication terminal device based on an edit page;
wherein linkage processing between devices relating to the creation of the web page is performed by a second server device, and a third server device provides the edit page;
wherein the communication terminal device, if accepting a creation instruction of the web page having the content included in the website reprinted thereto, sends creation instruction data including the content identification information of the content to the second server device;
wherein the second server device, if receiving the creation instruction data, sends content request data specifying the content identification information included in the creation instruction data to the first server device;
wherein the first server device, if receiving the content request data, reads out the content data corresponding to the content identification information specified with the received content request data to send it to the second server device;
wherein the second server device, if receiving the content data, stores the received content data and sends a content address indicating a storage location of the stored content data to the third server device;
wherein the third server device, if receiving the content address, sends the edit page embedded with the received content address to the communication terminal device; and
wherein the communication terminal device, if receiving the edit page, displays the edit page, and when accepting a comment with the displayed edit page, sends the accepted comment and the content address embedded in the edit page to the third server device.

2. The method of creating a web page according to claim 1, wherein the third server device includes a plurality of third server devices;
wherein the communication terminal device accepts the creation instruction corresponding to each of the plurality of third server devices, and when accepting the creation instruction, sends the creation instruction data including third server device identification information identifying the third server device corresponding to the creation instruction to the second server device; and
wherein the second server device sends the content address to the third server device identified by the third server device identification information included in the received creation instruction data.

3. A method of creating a web page, comprising:
displaying a website including a content obtained in such a manner in which a communication terminal device accesses a first server device storing content data of the content, the content data being made to correspond to content identification information; and
performing processing relating to a creation of a web page having the content reprinted thereto by the communication terminal device based on an edit page;
wherein linkage processing between devices relating to the creation of the web page is performed by a second server device;
wherein the communication terminal device, if accepting a creation instruction of the web page having the content included in the website reprinted thereto, sends creation instruction data including the content identification information of the content to the second server device;
wherein the second server device, if receiving the creation instruction data, sends content request data specifying the content identification information included in the creation instruction data to the first server device;
wherein the first server device, if receiving the content request data, reads out the content data corresponding to the content identification information specified with the received content request data to send it to the second server device:
wherein the second server device, if receiving the content data, stores the received content data and sends the edit page embedded with a content address indicating a storage location of the stored content data to the communication terminal device; and
wherein the communication terminal device, if receiving the edit page, displays the edit page, and when accepting a comment with the displayed edit page, sends the accepted comment and the content address embedded in the edit page to the second server device.

4. The method of creating a web page according to claim 3, wherein the plurality of third server devices store data relating to the created web page;
wherein the communication terminal device accepts the creation instruction corresponding to each of the plurality of third server devices, and when accepting the creation instruction, sends the creation instruction data including third server device identification information identifying the third server device corresponding to the creation instruction to the second server device; and
wherein the second server device sends the comment and content address sent from the communication terminal device to the third server device identified by the third server device identification information included in the received creation instruction data.

5. The method of creating a web page according to any one of claims 1, 2 and 4, wherein the third server device stores the sent comment and the content address as data relating to the web page;
wherein the third server device, if receiving a viewing request for the web page from a viewing terminal device, reads out the comment and the content address to be stored and sends them to the viewing terminal device;
wherein the viewing terminal device, if receiving the comment and the content address, sends an acquisition request for the content data to the second server device based on the received content address;
wherein the second server device, if receiving the acquisition request for the content data, reads out the content data relating to the acquisition request to send it to the viewing terminal device; and
wherein the viewing terminal device, if receiving the content data, displays the content based on the received content data along with the comment received from the third server device.

6. The method of creating a web page according to claim 5, wherein the first server device stores accompany data accompanying with the content being made to correspond to the content identification information, and upon receiving the content request data, sends the accompany data along with the content data to the second server device;
wherein the second server device, if receiving the content data and the accompany data, stores the accompany data along with the content data; and
wherein the second server device, if receiving the acquisition request for the content data, reads out the content data and the accompany data relating to the acquisition request to send them to the viewing terminal device.

7. The method of creating a web page according to any one of claims 1, 2, 4, 5, and 6, wherein the second server device provides a management website over a network, and sends a management site address relating to the management website to the third server device; and
wherein the third server device, upon receiving the management site address sent from the second server device in a case where the sent comment and the content address having been stored as the data relating to the web page, sends a page address of the web page as a trackback to the second server device based on the management site address.

8. The method of creating a web page according to claim 7, wherein the second server device is configured to:
create a management site address, as the management site address relating to the management website, by adding a variable address part to a fixed address part, and stores the created management site address;
compare, if receiving the page address as the trackback, a site address to be a destination of the trackback with the stored management site address; and
add, if the both site addresses match with each other as a result of the comparison, the received page address to the management website.

9. The method of creating a web page according to any one of claims 1, 2, 4, 5, 6, 7, and 8, wherein the first server device, if receiving the content request data, sends the site address of the website relating to the content to the second server device;
wherein the second server device sends the site address to the third server device; and
wherein the third server device, upon receiving the site address sent from the second server device in a case where the sent comment and the content address having been stored as data relating to the web page, sends a page address of the web page as a trackback to the first server device based on the site address.

10. The method of creating a web page according to claim 9, wherein the first server device is configured to:
create a site address as the site address by adding a variable address part to a fixed address part, and stores the created site address;
compare, if receiving the page address as the trackback, the site address to be a destination of the trackback with the stored site address; and
add, if the both site addresses match with each other as a result of the comparison, the received page address to the web site relating to the content.

11. The method of creating a web page according to any one of claims 1 to 10, wherein the second server device is configured to:
store, if receiving the content data from the first server device, the received content data being made to correspond to the content identification information;
search, if receiving the creation instruction data from the communication terminal device, the content data corresponding to the content identification information included in the creation instruction data from the stored content data; and
send, as a result of searching, if the appropriated content data is not found, the content request data specifying the content identification information to the first server device.

12. The method of creating a web page according to claim 11, wherein the second server device is configured to send, as a result of searching, if the appropriated content data is found, the content address indicating the storage location of the appropriated content data found by searching without sending the content request data to the first server device.

13. The method of creating a web page according to claim 12, wherein the second server device is configured to:
store a reference time in advance;
store, if receiving the content data from the first server device, the received content data being made to correspond to the content identification information, along with a storing date and time;
calculate, as the result of searching, if the appropriated content data is found, a time from the storing date and time relating to the appropriate content data to the searching time;
compare the calculated time with the reference time; and
send, as a result of the comparison, if the calculated time is shorter than the reference time, the content address indicating the storage location of the appropriated content data found by searching without sending the content request data to the first server device.

14. A method of creating a web page, comprising:
displaying a website including a content obtained in such a manner in which a communication terminal device accesses a first server device storing content data of the content, the content data being made to correspond to content identification information; and
performing processing relating to a creation of a web page having the content reprinted thereto by the communication terminal device based on an edit page, wherein linkage processing between devices relating to the creation of the web page is performed by a second server device, and a third server device provides the edit page;
wherein the communication terminal device, if accepting a creation instruction of the web page having the content included in the website reprinted thereto, sends creation instruction data including the content identification information of the content to the second server device;
wherein the second server device, if receiving the creation instruction data, sends content request data specifying the content identification information included in the creation instruction data to the first server device;
wherein the first server device, if receiving the content request data, sends a content address indicating a storage location of the content data on the basis of the content identification information specified with the received content request data to the second server device;
wherein the second server device, if receiving the content address, sends the content address to the third server device;
wherein the third server device, if receiving the content address, sends the edit page embedded with the received content address to the communication terminal device; and
wherein the communication terminal device, if receiving the edit page, displays the edit page, and when accepting a comment with the displayed edit page, sends the accepted comment and the content address embedded in the edit page to the third server device.

15. A method of creating a web page, comprising:
displaying a website including a content obtained in such a manner in which a communication terminal device accesses a first server device storing content data of the content, the content data being made to correspond to content identification information; and
performing processing relating to a creation of a web page having the content reprinted thereto by the communication terminal device based on an edit page;
wherein linkage processing between devices relating to the creation of the web page is performed by a second server device;
wherein the communication terminal device, if accepting a creation instruction of the web page having the content included in the website reprinted thereto, sends creation instruction data including the content identification information of the content to the second server device;
wherein the second server device, if receiving the creation instruction data, sends content request data specifying the content identification information included in the creation instruction data to the first server device;
wherein the first server device, if receiving the content request data, sends the content address indicating the storage location of the content data corresponding to the content identification information specified with the received content request data to the second server device;
wherein the second server device, if receiving the content address, sends the edit page embedded with the received content address to the communication terminal device; and
wherein the communication terminal device, if receiving the edit page, displays the edit page, and when accepting a comment with the displayed edit page, sends the accepted comment and the content address embedded in the edit page to the third server device.

16. The method of creating a web page according to any one of claims 1 to 15, wherein the communication terminal device, when accessing the first server device to display the website relating to the content, sends part request data relating to a request for a display element part which accepts the creation instruction to the second server device;
wherein the second server device, if receiving the part request data, sends the display element part accepting the creation instruction to the communication terminal device; and
wherein the communication terminal device, if receiving the display element part, lays out the received display element part in the website relating to the content to display the website.

17. The method of creating a web page according to any one of claims 1 to 16, wherein the communication terminal device displays the website via a browser based on a browser program;
wherein the second server device sends display definition data on the basis of an instruction accepting part which accepts the creation instruction and is incorporated into and displayed in the browser to the communication terminal device; and
wherein the communication terminal device, if receiving the display definition data, incorporates the instruction accepting part corresponding to the received display definition data into the browser to display the website via the browser.

18. A system of creating a web page, comprising:
a first server device for storing content data of a content being made to correspond to content identification information;
a communication terminal device for accessing the first server device to display a website including the content and performing processing relating to a creation of a web page having the content reprinted thereto based on an edit page;
a second server for performing linkage processing between devices relating to the creation of the web page; and
a third server device for providing the edit page;
wherein the communication terminal device includes a means for performing processing of sending, if receiving instructions on creating the web page having the content reprinted thereto included in the web site, creation instruction data including the content identification information corresponding to the content to the second server device;
wherein the second server device includes a means for performing processing of sending, if receiving the creation instruction data, content request data specifying the content identification information included in the creation instruction data to the first server device; and
wherein the first server devices includes a means for performing processing of reading out the content data corresponding to the content identification information specified with the received content request data and sending it to the second server device upon receiving the content request data;
wherein the second server device further includes:
a means for performing processing of storing the received content data upon receiving the content data; and
a means for performing the processing of sending a content address indicating a storage location of the content data to the third server device;
wherein the third server device includes:
a means for performing processing of embedding the received content address in the edit page upon receiving the content address; and
a means for performing processing of sending the edit page embedded with the content address to the communication terminal device; and
wherein the communication terminal device further includes:
a means for performing processing of displaying the received edit page upon receiving the edit page; and
a means for performing processing of sending, if receiving a comment on the displayed edit page, the received comment and the content address embedded in the edit page to the third server device.

19. A system of creating a web page, comprising:
a first server device for storing the content data of the content being made to correspond to content identification information;
a communication terminal device for accessing the first server device to display a website including the content and performing processing relating to a creation of a web page having the content reprinted thereto based on an edit page; and
a linkage server apparatus for performing linkage processing between devices relating to the creation of the web page;
wherein the communication terminal device includes a means for performing processing of sending, if receiving instructions on creating a web page having the content reprinted thereto included in the web site, the creation instruction data including content identification information of the content to the linkage server apparatus;
wherein the linkage server apparatus includes a means for performing processing of sending, if receiving the creation instruction data, the content request data specifying the content identification information included in the creation instruction data to content server device;
wherein the content server device includes a means for performing processing of reading out the content data corresponding to the content identification information specified with the received content request data and sending it to the linkage server apparatus upon receiving the content request data;
wherein the linkage server apparatus further includes:
a means for performing processing of storing the content data upon receiving the content data of the content from the content server device;
a means for performing processing of embedding a content address indicating a storage location of the content data in the edit page; and
a means for performing processing of sending the edit page embedded with the content address to the communication terminal device;
wherein the communication terminal device further includes:
a means for performing processing of displaying the received edit page upon receiving the edit page; and
a means for performing processing of sending, if receiving a comment on the displayed edit page, the received comment and the content address to the linkage server apparatus.

20. A linkage server apparatus for performing linkage processing between devices relating to a creation of a web page, in a case where an external communication terminal device performs processing relating to the creation of the web page having a content reprinted thereto, the content is relating to content data stored in an external content server device, the content data being made to correspond to content identification information, and the linkage server apparatus comprising:
a means for performing processing of sending content request data specifying the content identification information included in creation instruction data to the external content server device if the creation instruction data including the content identification information is received from the external communication terminal device;
a means for performing processing of storing, if the content data is received in response to the content request data being sent, the received content data; and
a means for performing processing of sending a content address indicating a storage location of the content data to an external server device.

21. A linkage server apparatus for performing linkage processing between devices relating to a creation of a web page, in a case where an external communication terminal device performs processing relating to the creation of the web page having a content reprinted thereto, the content is relating to content data stored in an external content server device, the content data being made to correspond to content identification information, and the linkage server apparatus comprising:
a means for performing processing of sending content request data specifying the content identification information included in creation instruction data to the external content server device if the creation instruction data including the content identification information is received from the external communication terminal device;
a means for performing processing of sending a received content address to the external server device if the content address indicating the storage location of the content data in the external content server device is received in response to the content request data being sent.

22. A linkage server apparatus for performing linkage processing between devices relating to a creation of a web page, in a case where an external communication terminal device performs processing relating to the creation of the web page having a content reprinted thereto on the basis of an edit page, the content is relating to content data stored in an external content server device, the content data being made to correspond to content identification information, and the linkage server apparatus comprising:
a means for performing processing of sending content request data specifying the content identification information included in creation instruction data to the external content server device if the creation instruction data including the content identification information is received, from the external communication terminal device;
a means for performing processing of storing, if the content data is received in response to the content request data being sent, the received content data;
a means for performing processing of embedding a content address indicating a storage location of the content data in the edit page; and
a means for performing processing of sending the edit page embedded with the content address to the external communication terminal device.

23. A linkage server apparatus for performing linkage processing between devices relating to a creation of a web page, in a case where an external communication terminal device performs processing relating to the creation of the web page having a content reprinted thereto on the basis of an edit page, the content is relating to content data stored in an external content server device, the content data being made to correspond to content identification information, and the linkage server apparatus comprising:
a means for performing processing of sending content request data specifying the content identification information included in creation instruction data to the external content server device if the creation instruction data including the content identification information is received from the external communication terminal device;
a means for performing processing of embedding, in a case where the content address indicating a storage location of the content data in the external content server device is received in response to the content request data being sent, received content address in the edit page; and
a means for performing processing of sending the edit page embedded with the content address to the external communication terminal device.

24. A computer program for causing a computer having a communication means and a storage means to perform linkage processing between devices relating to a creation of a web page, in a case where an external communication terminal device performs processing relating to the creation of the web page having a content reprinted thereto, the content relating to content data stored in an external content server device, the content data being made to correspond to content identification information, and the computer program causing the computer to function as:
a means for performing processing of sending content request data specifying the content identification information included in creation instruction data to the external content server device via the communication means if the creation instruction data including the content identification information is received, from the external communication terminal device;
a means for performing processing of storing, if the content data is received in response to the content request data being sent, the received content data in the storage means; and
a means performing processing of sending a content address indicating a storage location of the content data to the external server device via the communication means.

25. A computer program for causing a computer having a communication means and a storage means to perform linkage processing between devices relating to a creation of a web page, in a case where an external communication terminal device performs processing relating to the creation of the web page having a content reprinted thereto, the content relating to content data stored in an external content server device, the content data being made to correspond to content identification information, and the computer program causing the computer to function as:
a means for performing processing of sending content request data specifying the content identification information included in creation instruction data to the external content server device via the communication means if the creation instruction data including the content identification information is received, from the external communication terminal device; and
a means for performing processing of sending, in a case where a content address indicating a storage location of the content data in the external content server device is received, in response to the content request data being sent, the received content address to the external server device via the communication means.

26. A computer program for causing a computer having a communication means and a storage means to perform linkage processing between devices relating to a creation of a web page, in a case where an external communication terminal device performs processing relating to the creation of the web page having a content reprinted thereto, the content relating to content data stored in an external content server device, the content data being made to correspond to content identification information based on an edit page, and the computer program causing the computer to function as:
a means for performing processing of sending content request data specifying the content identification information included in creation instruction data to the external content server device via the communication means if the creation instruction data including the content identification information is received, from the external communication terminal device; and
a means for performing processing of storing, if the content data is received in response to the content request data being sent, the received content data in the storage means;
a means for performing processing of embedding a content address indicating a storage location of the content data in the edit page; and
a means for performing processing of sending the edit page embedded with the content address to the external communication terminal device via the communication means.

27. A computer program for causing a computer having a communication means and a storage means to perform linkage processing between devices relating to a creation of a web page, in a case where an external communication terminal device performs processing relating to the creation of the web page having a content reprinted thereto, the content relating to content data stored in an external content server device, the content data being made to correspond to content identification information, and the computer program causing the computer to function as:
a means for performing processing of sending content request data specifying the content identification information included in creation instruction data to the external content server device via the communication means if the creation instruction data including the content identification information is received, from the external communication terminal device;
a means for performing processing of embedding, in a case where a content address indicating a storage location of the content data in the external content server device is received, in response to the content request data being sent, the received content address in the edit page; and
a means for performing processing of sending the edit page embedded with the content address to the external communication terminal device via the communication means.
